(19) Europäisches Patentamt / European Patent Office / Office européen des brevets

(11) **EP 3 540 264 B1**

(12) **EUROPEAN PATENT SPECIFICATION**

(45) Date of publication and mention of the grant of the patent:
**11.08.2021   Bulletin 2021/32**

(51) Int Cl.:
**F16H 25/24** *(2006.01)*   **F16C 19/16** *(2006.01)*
**F16C 19/18** *(2006.01)*   **F16C 33/64** *(2006.01)*
**F16C 43/06** *(2006.01)*   **F16H 25/22** *(2006.01)*

(21) Application number: **17869656.3**

(22) Date of filing: **10.11.2017**

(86) International application number:
**PCT/JP2017/040647**

(87) International publication number:
**WO 2018/088540 (17.05.2018 Gazette 2018/20)**

(54) **BALL SCREW DEVICE**

KUGELROLLSPINDELVORRICHTUNG

DISPOSITIF VIS À BILLES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.11.2016   JP 2016220442**
**19.10.2017   JP 2017202935**
**19.10.2017   JP 2017202936**

(43) Date of publication of application:
**18.09.2019   Bulletin 2019/38**

(73) Proprietor: **NSK Ltd.**
**Tokyo 141-8560 (JP)**

(72) Inventors:
• **KAJIHARA Yosuke**
  **Fujisawa-shi**
  **Kanagawa 252-0811 (JP)**
• **YAMAMOTO Kazuhito**
  **Fujisawa-shi**
  **Kanagawa 252-0811 (JP)**
• **NOBUTOMO Masahiro**
  **Fujisawa-shi**
  **Kanagawa 252-0811 (JP)**
• **NAGAI Yutaka**
  **Fujisawa-shi**
  **Kanagawa 252-0811 (JP)**
• **WATARAI Yusuke**
  **Fujisawa-shi**
  **Kanagawa 252-0811 (JP)**
• **MORIYAMA Masahito**
  **Fujisawa-shi**
  **Kanagawa 252-0811 (JP)**
• **KATSUNO Yoshiaki**
  **Fujisawa-shi**
  **Kanagawa 251-8501 (JP)**

(74) Representative: **Rings, Rolf**
**Klingseisen, Rings & Partner**
**Patentanwälte**
**Postfach 10 15 61**
**80089 München (DE)**

(56) References cited:
**JP-A- 2002 174 229     JP-A- 2007 285 480**

# Description

Technical Field

The present invention relates to a ball screw device.

Background Art

A ball screw includes a threaded shaft, a nut, and multiple balls. The nut into which the threaded shaft is inserted has a helical groove that faces a helical groove of the threaded shaft. The balls are rollably arranged on a helical raceway formed of the helical groove of the threaded shaft and the helical groove of the nut. The ball screw is a device that converts rotation of the threaded shaft into linear motion of the nut, or rotation of the nut into linear motion of the threaded shaft, through the balls rolling on the helical raceway while being subjected to a load.

In a facility for producing machine tools or the like, a ball screw is used as a device that converts rotation of a threaded shaft into linear motion of a nut. In this case, the ball screw requires a support bearing that rotatably supports both axial ends of the threaded shaft.

In a ball screw device disclosed in PTL 1, an inner ring raceway groove of a rolling bearing provided as a support bearing is formed on an outer circumferential surface of one axial end of a threaded shaft. Thus, it is unnecessary to fix an inner ring of the rolling bearing to the threaded shaft with a locknut, and also unnecessary to form a threaded portion of the rolling bearing for screwing the locknut to the threaded shaft. Then, in Example 1 of PTL 1, a double row angular ball bearing having two outer rings as a support bearing is adopted.

In the prior art according to JP 2007 285480 A, a ball screw device with a threaded shaft, a nut, and multiple balls running in an inner ring raceway groove as well as in an outer ring raceway groove is disclosed, in which the ball screw device converts a rotation of the threaded shaft into a linear motion of the nut of the ball screw device through the balls rolling on the helical raceways while being subjected to a load.

JP 2002 174229 A also discloses a ball screw device with a threaded shaft, a nut and a plurality of balls provided in helical raceways of an inner ring raceway groove and an outer ring raceway groove, wherein a lid in the form of the inner surface of a raceway groove portion is provided.

That is, PTL 1 discloses a ball screw device that includes a ball screw and a rolling bearing composed of an inner ring raceway groove formed on an outer circumferential surface of one axial end of a threaded shaft of the ball screw, an outer ring having an outer ring raceway groove corresponding to the inner ring raceway groove, and multiple balls rollably arranged between the inner ring raceway groove and the outer ring raceway groove.

Citation List

Patent Literature
PTL 1: JP 2007-285480 A

Summary of Invention

Technical Problem

In the ball screw device according to Example 1 of PTL 1, when the balls and the outer rings are set on the inner ring raceway groove provided on one axial end of the threaded shaft and assembled into the rolling bearing, it is necessary to insert the outer rings embedded with the balls into the one axial end of the threaded shaft; therefore, it is troublesome to assemble the rolling bearing. Furthermore, the load capacity of the rolling bearing cannot be changed unless the inner ring raceway groove is modified.

An object of the present invention is to provide, as a ball screw device including a rolling bearing composed of an inner ring raceway groove provided on one axial end of a threaded shaft, an outer ring, and balls, a ball screw device that makes it possible to reduce the trouble of assembling and to change the load capacity of the rolling bearing without modifying the inner ring raceway groove.

This problem is solved by means of a ball screw device with the features of claim 1. Preferred forms of realization are defined in dependent claims.

Solution to Problem

To solve the above-described problems, a ball screw device according to an aspect of the invention having the following Configurations (1) to (3).

(1) The ball screw device includes a threaded shaft, a nut into which the threaded shaft is inserted has a helical groove that faces a helical groove of the threaded shaft, multiple first balls rollably arranged on a helical raceway configured by the helical groove of the threaded shaft and the helical groove of the nut, an inner ring raceway groove formed on an outer circumferential surface of a portion of the threaded shaft that is a different portion provided with the helical groove, an outer ring having an outer ring raceway groove that faces the inner ring raceway groove, and multiple second balls rollably arranged between the inner ring raceway groove and the outer ring raceway groove. The inner ring raceway groove, the outer ring, and the second balls configure a rolling bearing.

(2) The outer ring has a rolling element insertion hole (an insertion hole for the second balls) penetrating from its outer circumferential surface to the outer ring raceway groove and a lid configured to cover the rolling element insertion hole. An inner surface of the lid is formed into a concave shape to serve as part of the outer ring raceway groove.

(3) The ball screw device is a device that converts rotation of the threaded shaft into linear motion of the nut through the first balls rolling on the helical raceway while being subjected to a load.

Advantageous Effects of Invention

According to the present invention, it is possible to provide, as a ball screw device including a rolling bearing composed of an inner ring raceway groove provided on one axial end of a threaded shaft, an outer ring, and balls, a ball screw device that makes it possible to reduce the trouble of assembling and to change the load capacity of the rolling bearing without modifying the inner ring raceway groove.

Brief Description of Drawings

FIG. 1 is a partial cross-sectional side view illustrating a ball screw device according to a first embodiment, and depicts a cross-section of an outer ring of a rolling bearing;
FIG. 2 is a side view partially illustrating a ball screw included in the ball screw device according to the first embodiment;
FIG. 3 is a view on arrow A in FIGS. 1 and 2;
FIG. 4 is a diagram illustrating one end of a threaded shaft and the outer ring of the rolling bearing included in the ball screw device according to the first embodiment;
FIG. 5 is a view on arrow B in FIGS. 1 and 4;
FIGS. 6A, 6B, and 6C are respectively a plan view, a front view, and a bottom view illustrating a lid that covers a rolling element insertion hole of the outer ring included in the ball screw device according to the first embodiment;
FIG. 7 is a partial cross-sectional side view illustrating a ball screw device according to a second embodiment, and depicts a cross-section of an outer ring of a rolling bearing;
FIG. 8 is a diagram illustrating one end of a threaded shaft and an outer ring of a rolling bearing included in a ball screw device according to a third embodiment;
FIG. 9 is a diagram illustrating one end of a threaded shaft and an outer ring of a rolling bearing included in a ball screw device according to a fourth embodiment;
FIG. 10 is a diagram illustrating one end of a threaded shaft and an outer ring of a rolling bearing included in a ball screw device according to a fifth embodiment;

FIG. 11 is a diagram illustrating one end of a threaded shaft and an outer ring of a rolling bearing included in a ball screw device according to a sixth embodiment;
FIG. 12 is a diagram illustrating one end of a threaded shaft and an outer ring of a rolling bearing included in a ball screw device according to a seventh embodiment;
FIG. 13 is a diagram illustrating one end of a threaded shaft and an outer ring of a rolling bearing included in a ball screw device according to an eighth embodiment;
FIG. 14 is a diagram that describes a problem that the ball screw device according to the eighth embodiment can solve;
FIG. 15 is a diagram illustrating one end of a threaded shaft and an outer ring of a rolling bearing included in a ball screw device according to a ninth embodiment and a state of the ball screw device attached to a housing;
FIG. 16A is a front view illustrating a detent that connects the two divided parts of the rolling bearing included in the ball screw device according to the ninth embodiment;
FIG. 16B is a cross-sectional view of the detent along a line b-b in FIG. 16A;
FIG. 17 is a partial enlarged view of FIG. 15;
FIG. 18 is a partial cross-sectional side view illustrating a ball screw device according to a tenth embodiment, and depicts a cross-section of an outer ring of a rolling bearing;
FIG. 19 is an enlarged cross-sectional view illustrating the rolling bearing included in the ball screw device according to the invention
FIGS. 20A and 20B are respectively a plan view and a side view illustrating the rolling bearing included in the ball screw device according to the invention
FIG. 21 is a diagram illustrating a lid that covers a rolling element insertion hole of the outer ring included in the ball screw device according to the invention an eleventh embodiment and a sixteenth embodiment, and FIG. 21A is a plan view, FIG. 21B is a view on arrow b in FIG. 21A and is partially a cross-sectional view of the lid along a line B-B in FIG. 21A, FIG. 21C is a cross-sectional view of the lid along a line C-C in FIG. 21A, and FIG. 21D is a bottom view;
FIG. 22 is a partial cross-sectional side view illustrating a ball screw device according to the eleventh embodiment, and depicts a cross-section of an outer ring of a rolling bearing;
FIG. 23 is an enlarged cross-sectional view illustrating the rolling bearing included in the ball screw device according to the eleventh embodiment;
FIGS. 24A and 24B are respectively a plan view and a side view illustrating the rolling bearing included in the ball screw device according to the eleventh embodiment;
FIG. 25 is an enlarged cross-sectional view illustrating a rolling bearing included in a ball screw device according to a twelfth embodiment;

FIG. 26 is an enlarged cross-sectional view illustrating a rolling bearing included in a ball screw device according to a thirteenth embodiment;

FIG. 27 is an enlarged cross-sectional view illustrating a rolling bearing included in a ball screw device according to a fourteenth embodiment;

FIG. 28 is a diagram illustrating a rolling bearing included in a ball screw device according to a fifteenth embodiment, and depicts a cross-section, perpendicular to an axis direction;

FIGS. 29A and 29B are respectively a plan view and a side view illustrating a rolling bearing included in a ball screw device according to the sixteenth embodiment;

FIG. 30 is a cross-sectional view of the rolling bearing along a line C-C in FIG. 29;

FIG. 31 is a diagram illustrating a holding piece included in the rolling bearing in FIG. 29, and FIGS. 31A, 31B, and 31C are a front view, a side view, and a cross-sectional view along a line A-A in FIG. 31A, respectively;

FIG. 32 is an enlarged cross-sectional view illustrating a rolling bearing included in a ball screw device according to a seventeenth embodiment;

FIG. 33 is a diagram illustrating a lid that covers a rolling element insertion hole of an outer ring included in the ball screw device according to the seventeenth embodiment, and FIG. 33A is a plan view, FIG. 33B is a view on arrow b in FIG. 33A, FIG. 33C is a front view, and FIG. 33D is a bottom view;

FIGS. 34A and 34B are respectively a plan view and a side view illustrating the rolling bearing included in the ball screw device according to the seventeenth embodiment;

FIG. 35 is an enlarged cross-sectional view illustrating a rolling bearing included in a ball screw device according to an eighteenth embodiment;

FIG. 36 is a diagram illustrating a lid that covers a rolling element insertion hole of an outer ring included in the ball screw device according to the eighteenth embodiment, and FIG. 36A is a plan view, and FIG. 36B is a cross-sectional view along a line A-A in FIG. 36A;

FIG. 37 is a partial cross-sectional side view illustrating an example of a seal of a rolling bearing included in a ball screw device according to a nineteenth embodiment;

FIG. 38 is a diagram illustrating a rolling bearing included in a ball screw device according to a twentieth embodiment;

FIG. 39 is an enlarged cross-sectional view illustrating a rolling bearing (a rolling bearing having a greasing structure) included in a ball screw device according to a twenty-second embodiment, and is a diagram illustrating an example where an outer ring is provided with the greasing structure;

FIG. 40 is an enlarged cross-sectional view illustrating the rolling bearing included in the ball screw device according to the twenty-second embodiment, and is a diagram illustrating an example where a threaded shaft is provided with the greasing structure;

FIG. 41 is an enlarged cross-sectional view illustrating the rolling bearing included in the ball screw device according to the twenty-second embodiment, and is a diagram illustrating another example where the outer ring is provided with the greasing structure;

FIG. 42 is a plan view illustrating the rolling bearing included in the ball screw device according to the twenty-second embodiment, and is a diagram illustrating an example where a lid is provided with the greasing structure;

FIG. 43 is a partially cutaway enlarged cross-sectional view illustrating the rolling bearing included in the ball screw device according to the twenty-second embodiment, and is a diagram illustrating an example where a raceway groove is provided with the greasing structure;

FIG. 44 is a diagram illustrating an example where a lid insertion hole of the outer ring is provided with the greasing structure in the rolling bearing included in the ball screw device according to the twenty-second embodiment, and FIG. 44A depicts an engagement portion, and FIG. 44B is a partial enlarged view of FIG. 44A;

FIG. 45 is a partial cross-sectional side view illustrating a ball screw device (a ball screw device having a cooling mechanism) according to a twenty-third embodiment, and depicts a cross-section of a portion of an outer ring of a rolling bearing; and

FIG. 46 is a diagram illustrating the rolling bearing included in the ball screw device according to the twenty-third embodiment, and illustrates an example of a connection structure of through holes through which a coolant passes that is different from the example of FIG. 45. Description of Embodiments

[About Ball Screw Device according to Aspect of the Invention]

As described above, a ball screw device according to an aspect of the present invention has the foregoing Configurations (1) to (3) ; however, besides these, it can have any of the following Configurations (4) to (14) and (21) to (28) .

(4) The rolling bearing is subjected to a preload.
(5) The ball screw device includes multiple rows of inner ring raceway grooves and multiple rows of outer ring raceway grooves; the groove cross-sectional shape of the inner ring raceway grooves and the outer ring raceway grooves is a single arc or Gothic arc shape.
(6) The ball screw device has Configuration (5), and includes two rows of inner ring raceway grooves and two rows of outer ring raceway grooves; the rolling bearing is subjected to a preload by an offset preloading method.

(7) The ball screw device has Configuration (5), and includes two rows of inner ring raceway grooves and two rows of outer ring raceway grooves; the outer ring is composed of two divided parts into which the outer ring is divided between the two outer ring raceway grooves; the rolling bearing is subjected to a preload by a spacer provided between the two divided parts.

(8) The ball screw device has Configuration (5), and includes two rows of inner ring raceway grooves and two rows of outer ring raceway grooves; the rolling bearing is subjected to a preload by an oversized ball method.

(9) An outer circumferential surface of the outer ring is a spherical surface.

(10) The ball screw device has Configuration (5), and includes two rows of inner ring raceway grooves and two rows of outer ring raceway grooves; the outer ring is composed of two divided parts into which the outer ring is divided between the two rows of outer ring raceway grooves, and the two divided parts are provided with a groove on their axial end surface in contact with each other; a detent provided in a space formed by these grooves restrains the two divided parts from moving both in a radial direction and in an axial direction.

(11) The outer ring has a small diameter portion and a large diameter portion that differ in outer diameter; the large diameter portion has an axial end surface in contact with an axial end surface of a housing to which the outer ring is attached; the small diameter portion has an outer circumferential surface in contact with an inner circumferential surface of the housing; a corner formed by a small-diameter-portion-side axial end surface of the large diameter portion and the outer circumferential surface of the small diameter portion has an undercut.

(12) The outer diameter of the outer circumferential surface of the threaded shaft is the same between a portion provided with the helical groove and a portion provided with the inner ring raceway groove.

(13) The ball screw device has Configuration (12), and a retained austenite amount $\gamma_{RS}$ [volume%] of a surface (a surface part) of the threaded shaft satisfies the following Equation (1) in the portion provided with the helical groove and the portion provided with the inner ring raceway groove.

$$\gamma_{RS} = \frac{\alpha_S + 1.14}{0.238} \quad \cdots \quad (1)$$

(In the above equation, $\alpha_S$ denotes the ratio of a life of the helical groove of the threaded shaft to the required life of the ball screw device, and $\alpha_S$ is greater than 1.)

(14) The ball screw device has Configuration (12), and a retained austenite amount $\gamma_{RS}$ [volume%] of the surface (the surface part) of the threaded shaft satisfies the foregoing Equation (1) in a range from the portion provided with the inner ring raceway groove to the portion provided with the helical groove in the axial direction.

(21) The second balls are made of metal or ceramics.

(22) The ball screw device includes three or more rows of inner ring raceway grooves and three or more rows of outer ring raceway grooves. That is, the rolling bearing has three or more rows of raceways.

(23) The ball screw device is used for applying an axially non-uniform load to the rolling bearing (for example, in a case where the nut is fixed to a linear moving part of an electric injection molding machine or a press machine, and is subjected to a high load), and has Configuration (22) ; the rolling bearing has a structure of suppressing non-uniformity of the amount of axial deformation caused by the load. Furthermore, of the three or more rows of raceways, one row (on the side farther away from a point of application of the load) is set as a raceway for preload application, and the other rows (on the side close to the point of application of the load) are set as a raceway for load bearing. Accordingly, the load acting per row of raceway for load bearing in the rolling bearing is reduced, thus it is possible to lengthen the life of the rolling bearing.

(24) The ball screw device is used for applying an axially non-uniform load to the rolling bearing, and has Configuration (22); the amount of preload applied to the rolling bearing is smaller on, of the multiple rows of raceways for load bearing, a raceway on the side closer to the point of application of the load than a raceway on the side farther away from the point of application of the load. In a case where the same amount of preload is applied to all the multiple raceways for load bearing, the amount of deformation of the rolling bearing is larger on the raceway on the side closer to the point of application of the load than the raceway on the side farther away from the point of application of the load; however, such differences in amount of preload on the raceways for load bearing improves non-uniformity of the amount of axial deformation of the rolling bearing as compared with a case where all the raceways for load bearing are subjected to the same amount of preload.

(25) The ball screw device is used for applying an axially non-uniform load to the rolling bearing, and has Configuration (22) ; the second balls on, of the multiple rows of raceways for load bearing, a raceway on the side closer to the point of application of the load has a larger diameter than the other raceways . Accordingly, as compared with a case where the second balls on all the raceways have the same dimensions, the load capacity of the raceway on the side closer to the point of application of the load is increased, and the life of the raceway on the side closer to the point of application of the load becomes longer, which makes the life of the entire rolling bearing longer.

(26) The ball screw device is used for applying an axially non-uniform load to the rolling bearing, and has Configuration (22); respective rows of axially adjacent rolling element insertion holes on the outer ring are arranged in different circumferential positions on the outer ring. Accordingly, as compared with a case where all rows of rolling element insertion holes are arranged in the same circumferential position of the outer ring, it is possible to suppress non-uniform deformation of the outer ring in a plane perpendicular to the axis when subjected to an axial load. Furthermore, the rows of rolling element insertion holes are evenly arranged in a circumferential direction of the outer ring, thus it is possible to uniformize the deformation of the outer ring in the plane perpendicular to the axis when subjected to an axial load.

(27) The ball screw device is used for applying an axially non-uniform load to the rolling bearing, and has Configuration (22); the outer ring has a flange, and the flange is provided on a portion of an end provided with no outer ring raceway grooves on the side opposite to the point of application of the load or in a range from a position second closest to the point of application of the load to a position farthest away from the point of application of the load on the multiple rows of outer ring raceway for load bearing. Accordingly, as compared with a case where the flange is provided in a position closest to the point of application of the load, non-uniformity of the amount of axial deformation of the rolling bearing is improved.

(28) The ball screw device is used for applying an axially non-uniform load to the rolling bearing, and has Configuration (22); in a cross-section perpendicular to the axial direction of the rolling bearing, the cross-sectional area of the outer ring in a groove bottom position of the outer ring raceway grooves and the cross-sectional area of a portion of the threaded shaft provided with the inner ring raceway grooves in a groove bottom position of the inner ring raceway grooves are the same. Accordingly, as compared with a case where there is a difference between the two cross-sectional areas, a difference in the amount of deformation between the outer ring and the portion of the threaded shaft provided with the inner ring raceway grooves can be reduced.

[About Configurations (13) and (14)]

As a result of a study on the increase of the life of a ball screw device, it turned out that a short-stroke ball screw device (that was used, for example, with a stroke factor fs of less than 4.8) is damaged mostly due to flaking of the threaded shaft of all components. Configurations (13) and (14) are based on this.

Furthermore, it turned out that setting the retained austenite amount of the surface of the helical groove of the threaded shaft to be larger than the retained austenite amounts of respective surfaces of the helical groove of the nut and the first balls was effective.

That is, we concluded that a combination of the threaded shaft, the nut, and the first balls composing a ball screw part should be defined by a magnitude relationship of the retained austenite amount of the surface.

Based on this, in the ball screw device having Configuration (13) and the ball screw device having Configuration (14) , a retained austenite amount $\gamma_{RN}$ [volume%] of the surface of the helical groove of the nut preferably satisfies the following Equation (2).

$$\gamma_{RN} = \frac{\alpha_N + 3.74 f_s^{-0.756}}{0.781 f_s^{-0.756}} \quad \cdots \quad (2)$$

(In the above equation, $\alpha_N$ denotes the ratio of a life of the helical groove of the nut to the required life of the ball screw device, and $\alpha_N$ is greater than 1.)

Furthermore, in the ball screw device having Configuration (13) and the ball screw device having Configuration (14), the retained austenite amount $\gamma_{RS}$ of the surface of the helical groove of the threaded shaft and the retained austenite amount $\gamma_{RN}$ of the surface of the helical groove of the nut are preferably in a relationship of "$\gamma_{RS} > \gamma_{RN}$".

Moreover, in the ball screw device having Configuration (13) and the ball screw device having Configuration (14), the retained austenite amount $\gamma_{RS}$ of the surface of the helical groove of the threaded shaft, the retained austenite amount $\gamma_{RN}$ of the surface of the helical groove of the nut, and a retained austenite amount $\gamma_{RB}$ of the surfaces of the first balls are preferably in a relationship of "$\gamma_{RS} > \gamma_{RN} > \gamma_{RB}$".

Furthermore, the ball screw device having Configuration (13) and the ball screw device having Configuration (14) are useful as a ball screw device for an electric injection molding machine, an electric servo press machine, an electric actuator, a servo cylinder, or an electric jack.

In the following description, a "thread groove surface" means a "surface of the helical groove".

According to the ball screw device having Configuration (13) and the ball screw device having Configuration (14), a longer life can be achieved by defining the retained austenite amounts of respective thread groove surfaces of the threaded shaft and the nut that are components of the ball screw device and defining a magnitude relationship of the two. Furthermore, all it takes is to set the retained austenite amount of the thread groove surface of the threaded shaft to be larger than those of the other components, thus conventional products can be used as the nut and the first balls, and therefore it is possible to increase production efficiency of the ball screw device and to suppress an increase in cost of the ball screw device.

Examples of the ball screw device used with a stroke factor fs of less than 4.8 include an electric injection molding machine, an electric servo press machine, a servo cylinder, an electric jack, etc., and the ball screw device having Configuration (13) and the ball screw device having Configuration (14) are useful for these. It is to be noted that a similar effect is obtained in a case of a roller screw device that uses a roller instead of the first balls.

In the ball screw device having Configuration (13) and the ball screw device having Configuration (14), a retained austenite amount $\gamma_{RS}$ [volume%] of the thread groove surface of the threaded shaft satisfies the following Equation (1) .

$$\gamma_{RS} = \frac{\alpha_S + 1.14}{0.238} \quad \cdots (1)$$

(In the above equation, $\alpha_S$ denotes the ratio of a life of the helical groove of the threaded shaft to the required life of the ball screw device, and $\alpha_S$ is greater than 1.) Furthermore, a retained austenite amount $\gamma_{RN}$ [volume%] of the thread groove surface of the nut preferably satisfies the following Equation (2).

$$\gamma_{RN} = \frac{\alpha_N + 3.74 f_s^{-0.756}}{0.781 f_s^{-0.756}} \quad \cdots (2)$$

(In the above equation, $\alpha_N$ denotes the ratio of a life of the helical groove of the nut to the required life of the ball screw device, and $\alpha_N$ is greater than 1.) In the ball screw device under a normal operating condition, unlike the rolling bearing, skidding between the balls and a raceway surface (the helical groove composing the helical raceway) of the threaded shaft or the nut due to twisting of the raceway is large, thus the form of raceway surface failure due to rolling contact fatigue is surface originated flaking. There is a correlation between the occurrence or development of failure leading to this surface originated flaking and the retained austenite

amount $\gamma_R$ of the surface of the raceway surface, and achievement of a life increasing effect can be expected by increasing the retained austenite amount $\gamma_R$ of the surface of the raceway surface more than usual.

Then, to quantitatively evaluate the life increasing effect made by an increase in the retained austenite amount $\gamma_R$, the present inventors experimentally examined a surface originated flaking life, using various induction-heat-treated component test specimens that differ in retained austenite amount $\gamma_R$ of the surface of the raceway surface. Also, a surface originated flaking life (a conventional life) in a case of using a conventional threaded shaft material (SAE4150) was examined by the same method.

As a result, it turned out that the following Relational Expression (11) held true between the retained austenite amount $\gamma_R$ [volume%] of the surface of each test specimen made of an induction-heat-treated material and a ratio $\alpha$ of a life of the test specimen to the conventional life.

$$\alpha = 0.238 \gamma_R - 1.14 \quad \cdots (11)$$

From Expression (11), it can be seen that to achieve a longer life ($\alpha > 1$) than the conventional ball screw device, the retained austenite amount $\gamma_R$ of the thread groove surface of the threaded shaft needs to be greater than 9% by volume. Furthermore, it can also be seen that an optimum retained austenite amount $\gamma_R$ that allows to achieve exactly a required life not too long or too short from the life required of the ball screw device can be estimated from Expression (11).

Incidentally, if the ball screw device with a static load in the axial direction is driven by rotation of the threaded shaft, the nut moves in a linear direction relative to the threaded shaft. At this time, an arbitrary spot of the raceway surface of the nut is subjected to repeated stress due to the passage of the balls with the load applied. Meanwhile, in the threaded shaft, a portion to be the raceway surface (the helical groove composing the helical raceway) moves in the axial direction in accordance with the linear movement of the nut. That is, in the threaded shaft, a portion subjected to repeated stress due to the passage of the balls with the load applied becomes part in the axial direction.

Therefore, in a case where the stroke of the nut is sufficiently long, the number of repetitions of stress that the raceway surface is subjected to through the passage of the balls with the load applied is increased more on the nut side than the threaded shaft side, thus it is known that the first rolling fatigue failure occurs on the raceway surface of the nut. Accordingly, in the conventional technology, the retained austenite amount $\gamma_R$ of the thread groove surface of the nut is set to be larger than the retained austenite amount $\gamma_R$ of the thread groove surface of the threaded shaft.

However, in the ball screw device used in an electric injection molding machine or the like, the stroke of the nut is short, thus a magnitude relationship of the number of repetitions of stress on the raceway surface with the passage of the balls with the load applied is reversed, and the number of repetitions of stress on the threaded shaft side is larger than on the nut side. Therefore, in a ball screw endurance test under a short-stroke operating condition, it was confirmed that the first rolling fatigue failure tended to occur on the threaded shaft side.

Furthermore, the fact that contact surface pressure between the balls and the raceway surface is increased more on the threaded shaft side than the nut side is also evidence to support the result that a position of the first failure deflected to the threaded shaft side.

Based on the failure characteristic of the raceway surface of the threaded shaft and the nut due to the contact surface pressure and the number of repetitions of stress as described above, the fatigue life of the raceway surface is inversely proportional to the ninth power of the contact surface pressure and also inversely proportional to the number of repetitions of stress; therefore, a life ratio $\beta$ of the nut raceway surface to the threaded shaft raceway surface can be represented by the following Equation (12).

$$\beta = \left(\frac{P_S}{P_N}\right)^9 \frac{N_S}{N_N} \quad \cdots \quad (12)$$

In the above equation, $P_S$ and $P_N$ denote respective contact surface pressures on the raceway surfaces of the threaded shaft and the nut; $N_S$ and $N_N$ denote the respective numbers of repetitions of stress on the raceway surface of the threaded shaft and the nut during one-stroke operation.

Then, to examine the life ratio $\beta$ of the raceway surface of the nut to the raceway surface of the threaded shaft in the ball screw device under an actual use condition, $P_S$ and $P_N$ and $N_S$ and $N_N$ were found from the respective axial loads and strokes of ball screw devices for a total of twenty models of electric injection molding machines having put to practical use. Furthermore, $\beta$ of each model was calculated by substituting these values into Equation (12).

As a result, it turned out that the following Relational Expression (13) held true between the life ratio $\beta$ and the stroke factor fs. The stroke factor fs is a value obtained by dividing the stroke (St) by the product of the number of active turns ($\xi$), the number of circuits ($\xi$), and the lead (I) of the ball screw device as illustrated in Equation (14) .

$$\beta = 3.28 f_s^{-0.756} \quad \cdots \quad (13)$$

$$f_s = \frac{St}{\zeta \xi l} \quad \cdots \quad (14)$$

From Expression (13), it can be seen that in a case of the ball screw device driven under a condition that allows a short stroke (fs<4.8) such as that of an electric injection molding machine, the life of the raceway surface of the nut is longer than that of the threaded shaft ($\beta$>1).

Therefore, for further improvement of the productivity, it is desirable that the retained austenite amounts $\gamma_R$ of the respective thread groove surfaces of the threaded shaft and the nut be determined to satisfy the required life of the ball screw device, taking into consideration the relationship of the raceway surface life between the threaded shaft and the nut in a case where the above-described stroke factor fs is less than 4.8.

Accordingly, using and Expressions (11) and (13), respective retained austenite amounts $\gamma_{RS}$ and $\gamma_{RN}$ necessary for the thread groove surfaces of the threaded shaft and the nut are estimated.

As described above, Expression (11) is an expressions obtained through experiments on the threaded shaft. Therefore, the retained austenite amount $\gamma_{RS}$ [volume%] of the thread groove surface of the threaded shaft is represented by the following Equation (15) that is modified from Expression (11) by replacing $\alpha$ in Expression (11) with $\alpha$s; $\alpha$s denotes the life ratio of the threaded shaft raceway groove to the ball screw device.

$$\gamma_{RS} = \frac{\alpha_S + 1.14}{0.238} \quad \cdots \quad (15)$$

Furthermore, the life ratio $\beta$ of the nut raceway surface to the threaded shaft raceway surface is represented by "$\beta = \alpha_N/\alpha_S$", where $\alpha_S$ denotes the life ratio of the threaded shaft raceway surface to the ball screw device, and $\alpha_N$ denotes the life ratio of the nut raceway surface to the ball screw device. By modifying this equation by substituting the right side of Expression (13) into $\beta$ and substituting the right side of Expression (11) into $\alpha_S$ in this equation, the retained austenite amount $\gamma_{RN}$ [volume%] of the thread groove surface of the nut is represented by the following Equation (16).

$$\gamma_{RN} = \frac{\alpha_N + 3.74 f_s^{-0.756}}{0.781 f_s^{-0.756}} \quad \cdots \quad (16)$$

Therefore, the retained austenite amounts $\gamma_{RS}$ and $\gamma_{RN}$ of the respective thread groove surfaces of the threaded shaft and the nut that allow the life of the threaded shaft raceway surface to be coincident with the life of the nut raceway surface can be estimated by substituting "$\alpha_S = \alpha_N = \alpha > 1$" into Equations (15) and (16).

That is, to increase the life ($\alpha > 1$) of the ball screw device used with a stroke factor fs of less than 4.8, it is reasonable to combine the threaded shaft and the nut so that the retained austenite amount $\gamma_{RS}$ of the threaded shaft thread groove surface represented by Equation (15) is larger than the retained austenite amount $\gamma_{RN}$ of the nut thread groove surface represented by Equation (16).

As described above, one of preferred forms of an aspect of the ball screw device is that the retained austenite amounts $\gamma_{RS}$ and $\gamma_{RN}$ of the thread groove surfaces (the surfaces of the helical grooves) of the threaded shaft and the nut meet Equations (1) and (2), respectively, and more preferably, if "$\gamma_{RS} > \gamma_{RN}$", raw materials of the threaded shaft and the nut are not limited.

However, from a standpoint of the productivity of the ball screw device, application of induction heat treatment to the threaded shaft is the mainstream; therefore, to set the retained austenite amount $\gamma_{RS}$ of the thread groove surface of the threaded shaft as described above, of materials suitable for the induction heat treatment, high-carbon bearing steel is preferable as a material of the threaded shaft.

Furthermore, it is preferable that the nut be subjected to carbonitriding treatment using case hardening steel as in a conventional way. By using a conventional nut as it is, the entire ball screw device can be produced inexpensively.

It is to be noted that a known method for induction heat treatment can be adopted. In that case, an output of an induction heating coil is controlled in a state of being devised to prevent overheat.

Moreover, as for the balls (the first balls, the rolling elements) that are another component of the ball screw device, since the balls rotate randomly, it is difficult to calculate their life by the same criteria. However, the balls rotate randomly, thus their surfaces in contact with the raceway surfaces of the threaded shaft and the nut change from moment to moment. Thus, the number of times each portion of the rolling contact surfaces of the balls is subjected to a load is less frequent as compared with the raceway surfaces of the threaded shaft and the nut, and therefore the balls have a longest life.

Therefore, the retained austenite amount $\gamma_{RB}$ of the surfaces of the balls is preferably smaller than those of the threaded shaft and the nut.

That is, a magnitude relationship of the retained austenite amounts $\gamma_R$ of the three, including the balls, is preferably "$\gamma_{RS} > \gamma_{RN} > \gamma_{RB}$". If these three satisfy the magnitude relationship, the balance of feature and productivity can be maximized even in a case where any of the components is damaged.

It is to be noted that conventional products can be used as the balls. By using conventional products, i.e., for example, products made from bearing steel by immersion quenching as the balls, it is possible to suppress an increase in cost of the ball screw device.

<About Ball Screw Device for High Load Application>

In recent years, there is an increasing need for a high-cycle and environment-friendly high-load machine such as an injection molding machine, and increase in the life and improvement of the durability are expected in a drive shaft.

A ball screw for high load application such as an injection molding machine is designed to cause a high load to be applied in a fixed direction. In a general ball screw, a small diameter portion (a portion having a smaller outer diameter than the portion provided with the helical groove) is provided on both axial ends of the threaded shaft to form a surface that an angular ball bearing or the like comes into contact with. That is, the threaded shaft is subjected to a stepped cutting process by cutting or grinding.

This small diameter portion serves as a bearing support portion; however, the bearing support portion is designed to be interference so that the inner ring does not to creep into the bearing support portion, and therefore its axial end surface that the outer circumferential surface and the bearing come in contact with is in a ground state in most cases. Accordingly, an undercut or an R-shaped corner is formed on the bearing support portion, and this corner becomes structural weakness. Therefore, in high axial load application, it is necessary to take a measure to prevent this corner from being subjected to the concentration of stress and thus being damaged.

As this measure, the bearing support portion is formed into not the small diameter portion but a flange having a larger outer diameter than the portion provided with the helical groove, and an axial end surface of the bearing is pressed against this flange surface. However, in this measure, when the threaded shaft is produced, to make the outer diameter of a portion other than the flange portion smaller, a process of cutting and grinding a portion (the portion provided with the helical groove) on the side closer to the axially center than the flange portion and the axial end is performed on a bar for the threaded shaft, thus the processing cost is increased.

On the other hand, if the bearing support portion (the axial end) of the threaded shaft is configured to be the same as the portion provided with the helical groove, and the retained austenite amount $\gamma_{RS}$ of the surface of the threaded shaft including the bearing support portion is configured to meet the foregoing Equation (1), it is possible to prevent the concentration of stress on the bearing support portion without having to increase the processing cost.

Furthermore, in the ball screw device according to the aspect of the present invention, if the retained austenite amount $\gamma_{RS}$ of the surface of the threaded shaft is configured to meet the foregoing Equation (1) on the portion provided with the helical groove and the portion provided with the inner ring raceway groove, the durability of the ball screw device is improved.

[Embodiments]

In the following, embodiments of the present invention will be described; however, the invention is not limited to the embodiments described below. In the embodiments described below, technologically preferred limitations are made to embody the invention; however, these limitations are not requirements of the invention.

[First Embodiment]

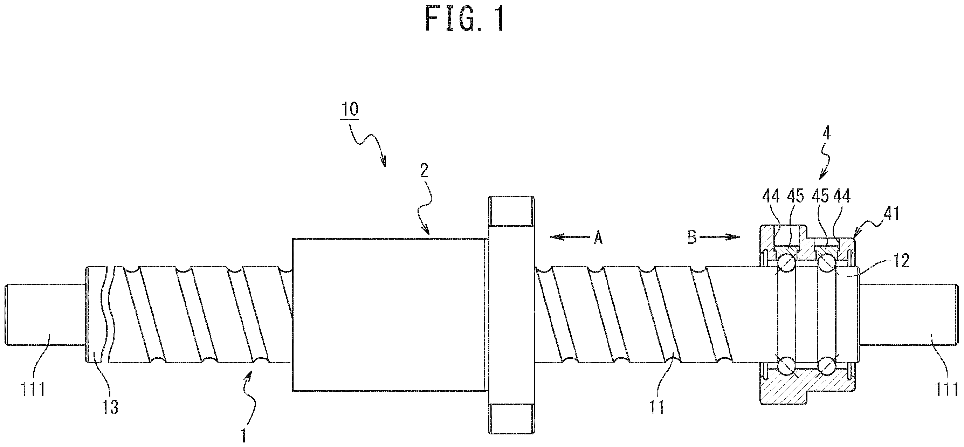

As illustrated in FIGS. 1 to 5, a ball screw device 10 according to a first embodiment includes a ball screw that includes a threaded shaft 1 having a helical groove 11 on its outer circumferential surface, a nut 2 having a helical groove 21 on its inner circumferential surface, and balls (first balls) 3. Both ends of the threaded shaft 1 are each processed into a small diameter portion 111 having a smaller diameter than a portion provided with the helical groove. On one axial end 12 of the threaded shaft 1 on the side connected to a motor (on the right end side in FIG. 1), a rolling bearing 4 is installed in a portion provided with no helical grooves between the small diameter portion 111 and the portion provided with the helical groove. The other axial end 13 of the threaded shaft 1 is also provided with the small diameter portion 111.

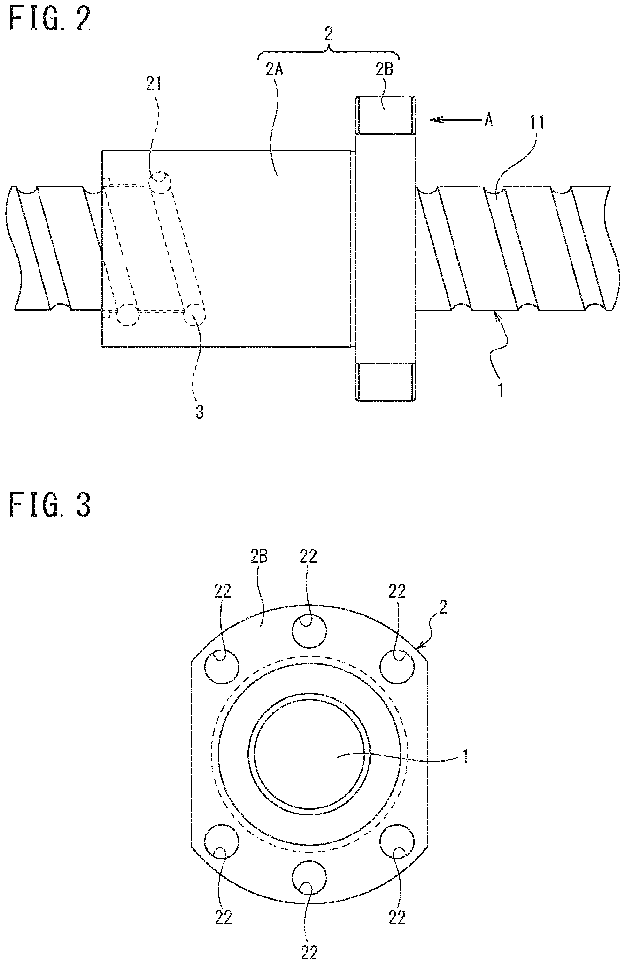

As illustrated in FIGS. 2 and 3, the nut 2 is composed of a cylindrical portion 2A and a flange portion 2B. The flange portion 2B is provided with bolt insertion holes 22 that penetrate in the axial direction.

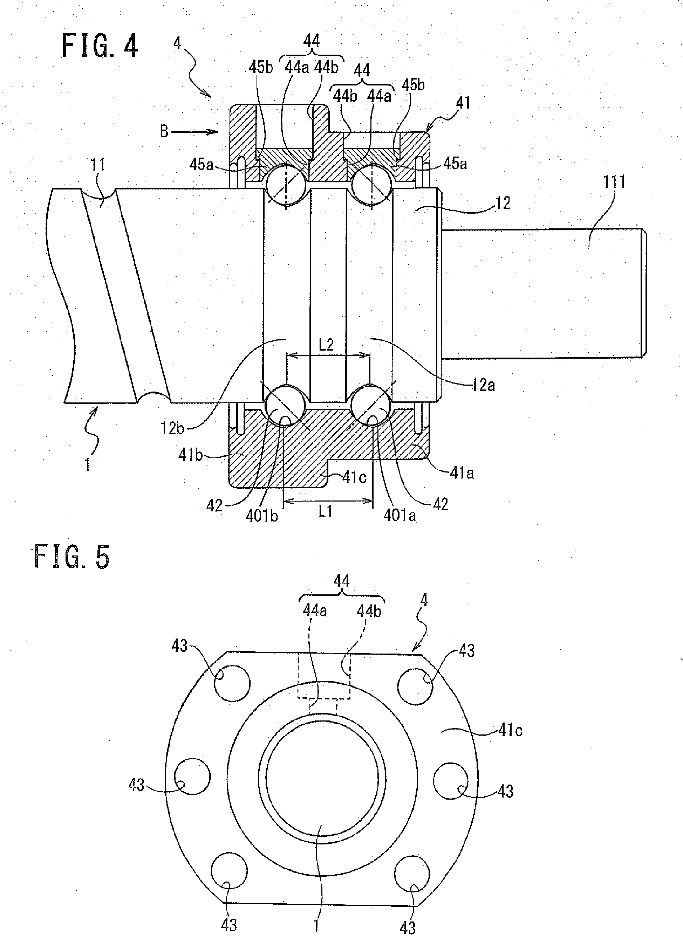

As illustrated in FIG. 4, the rolling bearing 4 is composed of two rows of inner ring raceway grooves 12a and 12b formed on the outer circumferential surface of the one axial end 12 of the threaded shaft 1, an outer ring 41 having outer ring raceway grooves 401a and 401b that face the inner ring raceway grooves 12a and 12b, and multiple balls (second balls) 42. The multiple balls 42 are rollably arranged between the inner ring raceway grooves 12a and 12b and the outer ring raceway grooves 401a and 401b. The multiple balls 42 are made of metal or ceramics.

Furthermore, the rolling bearing 4 is a full-ball bearing without a cage. It is to be noted that synthetic resin or metal spacer-balls or synthetic resin holding pieces may be provided between the balls 42.

Moreover, the groove cross-sectional shape of the inner ring raceway grooves 12a and 12b and the outer ring raceway grooves 401a and 401b is a Gothic arc shape. The rolling bearing 4 is subjected to a back to back duplex (DB) preload by the offset preloading method. That is, L1 is greater than L2.

Furthermore, the outer ring 41 is composed of a first raceway portion 41a provided with the outer ring raceway groove 401a and a second raceway portion 41b provided with the outer ring raceway groove 401b. An outer edge (a portion projecting outward from the first raceway portion 41a) 41c of the second raceway portion 41b is provided with bolt insertion holes 43 that penetrate in the axial direction. The first and second raceway portions 41a and 41b are each provided with a rolling element insertion hole 44 penetrating from their outer circumferential surface to the outer ring raceway groove 401a, 401b. The two rolling element insertion holes 44 are each covered with a lid 45.

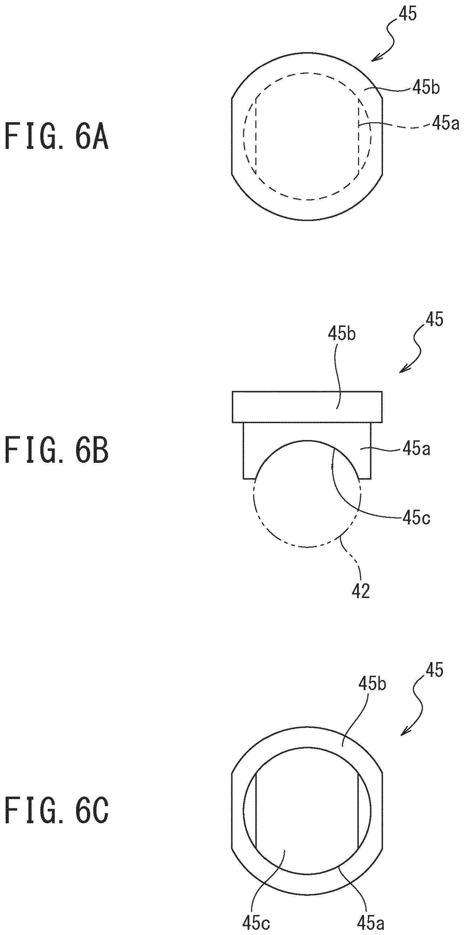

As illustrated in FIG. 6, the lid 45 is composed of a shaft 45a and a head 45b, and a distal end surface (an inner surface of a lid portion) 45c of the shaft 45a is formed into a concave shape to serve as part of the outer ring raceway groove 401a, 401b. As illustrated in FIG. 4, the rolling element insertion hole 44 is composed of an inside portion 44a having a shape fitted with the shaft 45a and an outside portion 44b having a shape fitted with the head 45b.

The lid 45 is secured not to come out of the rolling element insertion hole 44 with a C-shaped snap ring or an adhesive after the balls 42 have been put between the inner ring raceway grooves 12a and 12b and the outer ring raceway grooves 401a and 401b.

The ball screw device 10 is used by fixing the nut 2 to a member to be linearly moved, fixing the outer ring 41 of the rolling bearing 4 to a base through a housing, and connecting the motor to the small diameter portion 111 of the one axial end 12 of the threaded shaft 1. With the first raceway portion 41a put into the housing, and the second raceway portion 41b pressed against an axial end surface of the housing, the outer ring 41 is fixed to the housing with bolts put through the bolt insertion holes 43 of the second raceway portion 41b. It is to be noted that, for example, a deep groove ball bearing is attached to the small diameter portion 111 of the other axial end 13, and its outer ring is fixed to the base through the housing.

In the ball screw device 10 according to the first embodiment, the rolling bearing 4 with the preload applied is integral with a ball screw; therefore, by applying a preload depending on a requirement to the rolling bearing 4 in advance, the need for a preload adjustment is eliminated when the ball screw device 10 is installed in a machine tool or the like at the client's.

In a case where the application of a preload is performed at the client's, an assembly accuracy error may increase, which may reduce the rotation accuracy. On the other hand, the ball screw device 10 according to the first embodiment does not require a preload adjustment when the ball screw device 10 is installed in a machine tool or the like at the client's; therefore, it is not necessary to worry about reduction of the rotation accuracy associated with a preload adjustment.

Furthermore, in the ball screw device 10, the multiple balls 42 are made of metal or ceramics; therefore, the rolling bearing 4 is durable.

Moreover, the outer ring 41 is provided with the rolling element insertion holes 44; therefore, the balls 42 can be easily inserted between the inner ring raceway grooves 12a and 12b and the outer ring raceway grooves 401a and 401b from the side of an outer circumferential surface of the outer ring 41. Accordingly, after the outer ring raceway grooves 401a and 401b are set to face the inner ring raceway grooves 12a and 12b by putting the outer ring 41 on the one axial end 12 of the threaded shaft 1, the balls 42 can be arranged between the two raceway grooves.

Accordingly, it is possible to reduce the trouble of having to assemble the rolling bearing as compared with a ball screw device where the outer ring 41 embedded with the balls 42 has to be put on the one axial end 12 of the threaded shaft 1. Furthermore, the load capacity of the rolling bearing 4 in the axial direction and the radial direction can also be changed by changing the diameter of the balls 42 used without modifying the inner ring raceway grooves 12a and 12b and the outer ring raceway grooves 401a and 401b.

Moreover, the distal end surfaces 45c of the lids are formed into a concave shape to serve as part of the outer ring raceway grooves 401a and 401b, and therefore does not hinder a function as the rolling bearing 4.

[Second Embodiment]

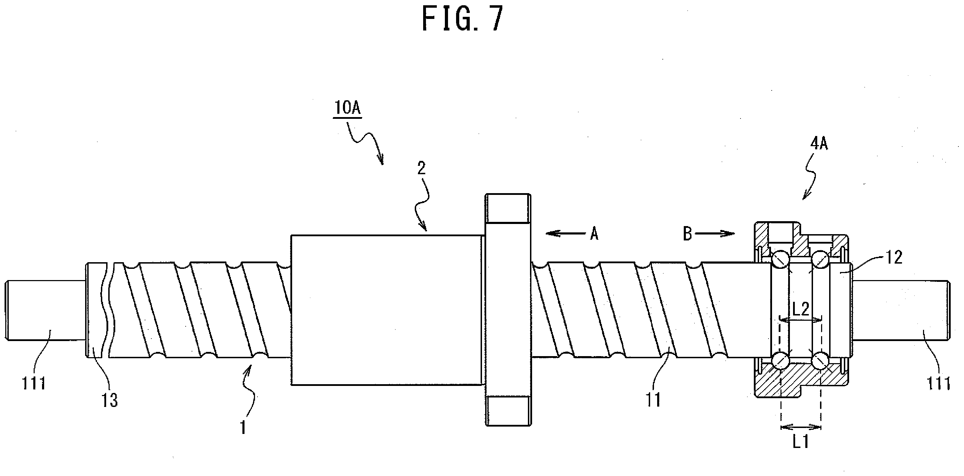

As illustrated in FIG. 7, in a ball screw device 10A according to a second embodiment, a rolling bearing 4A is subjected to a face to face duplex (DF) preload by the offset preloading method. That is, in FIG. 7, L1 is less than L2. Except for this, the ball screw device 10A has the same configuration as the ball screw device 10 according to the first embodiment.

[Third Embodiment]

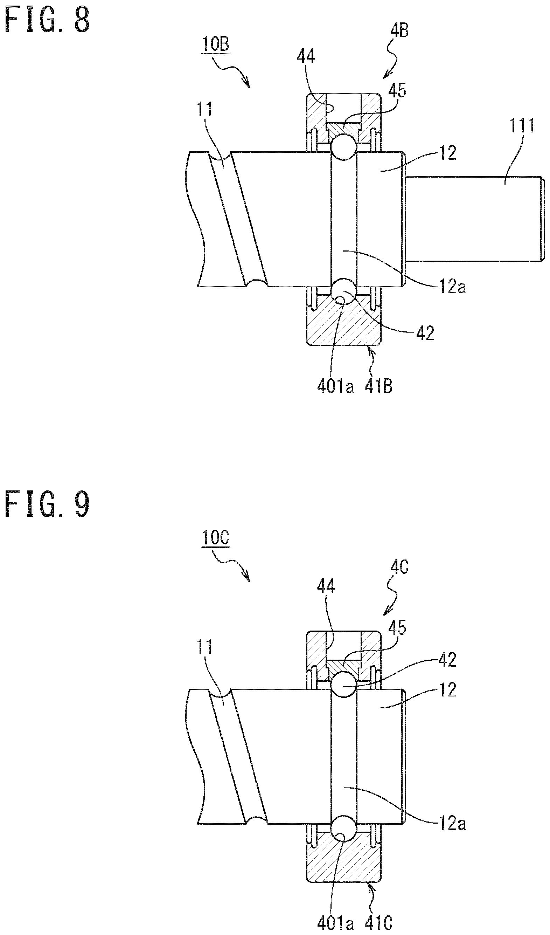

As illustrated in FIG. 8, in a ball screw device 10B according to a third embodiment, a single-row rolling bearing 4B is used; a preload depending on a requirement has been applied to the rolling bearing 4B by, for example, the oversized ball method in advance. Except for this, the ball screw device 10B has the same configuration as the ball screw device 10 according to the first embodiment.

[Fourth Embodiment]

As illustrated in FIG. 9, in a ball screw device 10C according to a fourth embodiment, a single-row rolling bearing 4C is used; a preload depending on a requirement has been applied to the rolling bearing 4C by, for example, the oversized ball method in advance. Furthermore, the threaded shaft is not provided with the small diameter portion 111. Except for these, the ball screw device 10C has the same configuration as the ball screw device 10 according to the first embodiment.

[Fifth Embodiment]

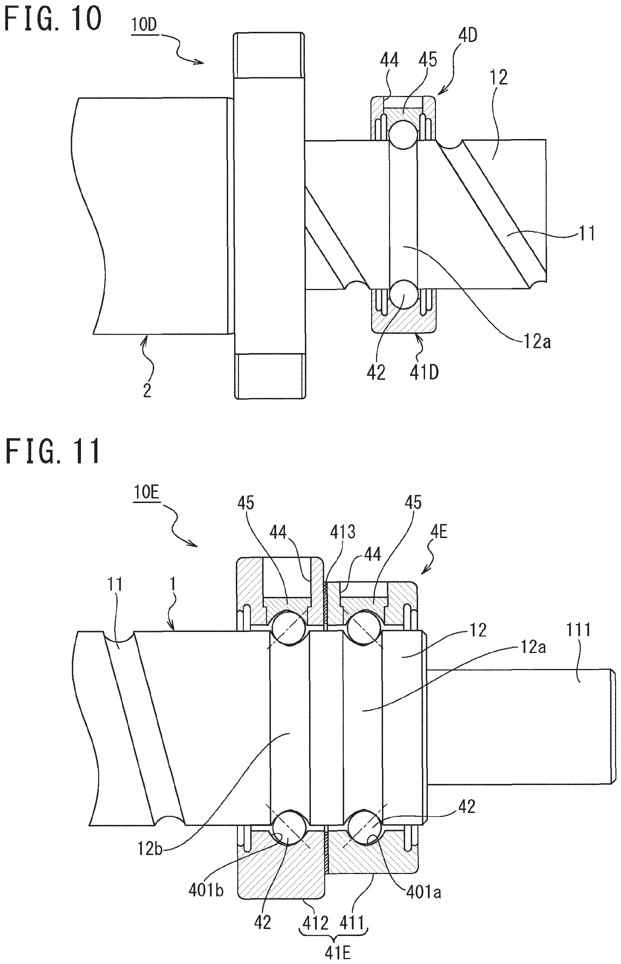

As illustrated in FIG. 10, in a ball screw device 10D according to a fifth embodiment, a single-row rolling bearing 4D is used; a preload depending on a requirement has been applied to the rolling bearing 4D by, for example, the oversized ball method in advance. Furthermore, the threaded shaft is not provided with the small diameter portion 111 and is provided with the inner ring raceway groove 12a on a portion of the outer circumferential surface of the one axial end 12 where the helical groove 11 has been formed. Except for these, the ball screw device 10D has the same configuration as the ball screw device 10 according to the first embodiment.

[Sixth Embodiment]

As illustrated in FIG. 11, in a ball screw device 10E according to a sixth embodiment, an outer ring 41E of a rolling bearing 4E is composed of two divided parts 411 and 412 into which the outer ring 41E is divided between the two rows of outer ring raceway grooves 401a and 401b. A spacer 413 is provided between the two divided parts 411 and 412. The rolling bearing 4E is subjected to a preload by the spacer 413 generating a force that widens a space between the two divided parts 411 and 412. Except for this, the ball screw device 10E has the same configuration as the ball screw device 10 according to the first embodiment.

[Seventh Embodiment]

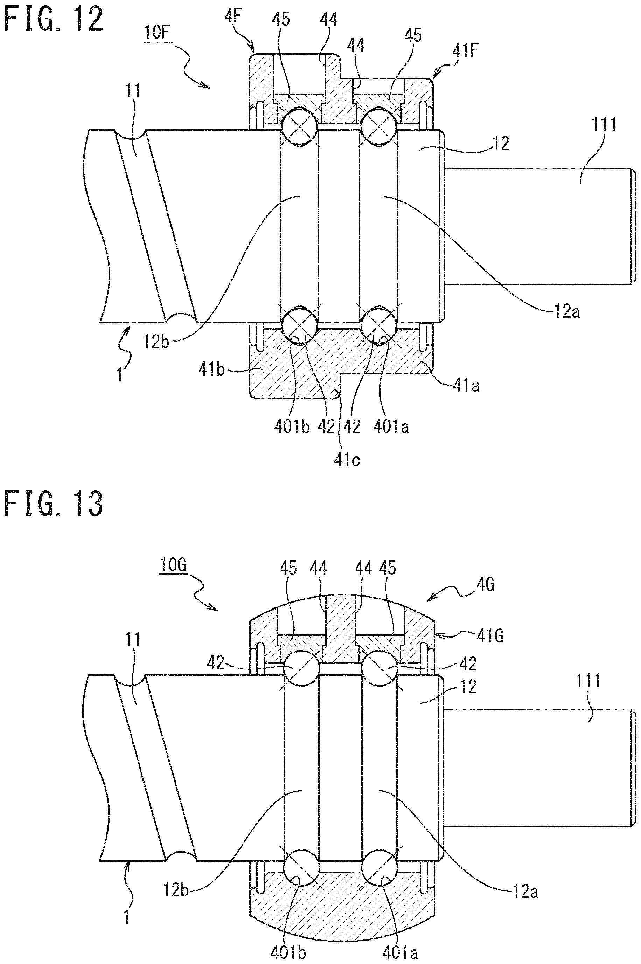

As illustrated in FIG. 12, in a ball screw device 10F according to a seventh embodiment, the diameter of the balls 42 of a rolling bearing 4F is configured to be greater than a distance between facing arcs of groove normal sections formed by the outer ring raceway grooves 401a and 401b and the inner ring raceway grooves 12a and 12b. Accordingly, the rolling bearing 4F is subjected to a preload by the oversized ball method. Except for this, the ball screw device 10F has the same configuration as the ball screw device 10 according to the first embodiment.

[Eighth Embodiment]

As illustrated in FIG. 13, in a ball screw device 10G according to an eighth embodiment, an outer circumferential surface of an outer ring 41G of a rolling bearing 4G is a spherical surface. Accordingly, the outer ring 41G has a property of aligning with the housing. Except for this, the ball screw device 10G has the same configuration as the ball screw device 10 according to the first embodiment.

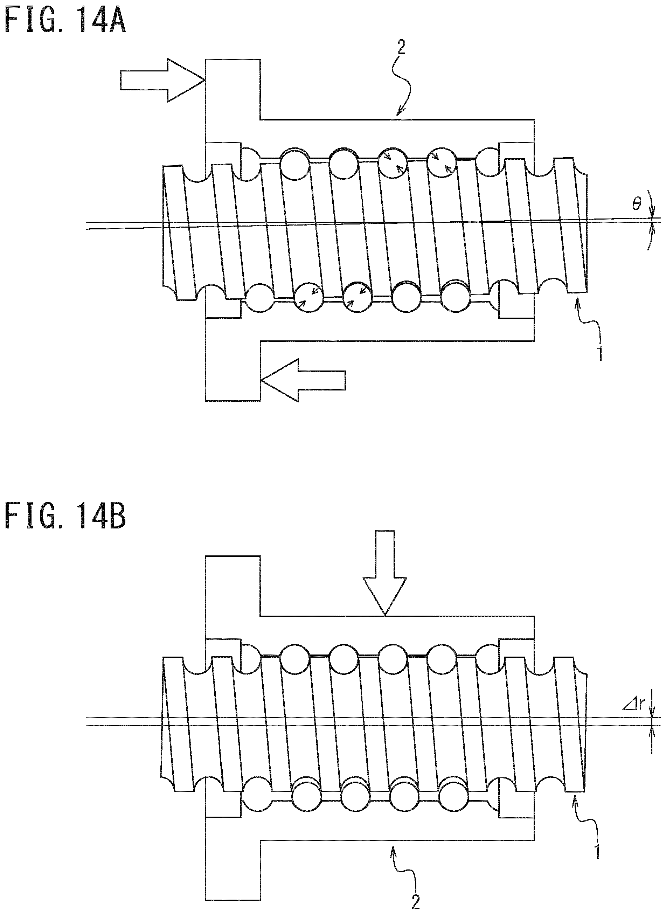

A ball screw installation error includes, specifically, a tilt error illustrated in FIG. 14A and a misalignment error illustrated in FIG. 14B. The tilt error causes a moment load, and the misalignment error causes a radial load. The outer ring 41G has the aligning property, and therefore can absorb a moment load or a radial load caused by such a ball screw installation error when the ball screw device 10G is in use.

Accordingly, the ball screw device 10G according to the eighth embodiment can achieve effects of improving the durability, the torque characteristics, and the feeding accuracy in addition to the effects that the ball screw device 10 according to the first embodiment has.

[Ninth Embodiment]

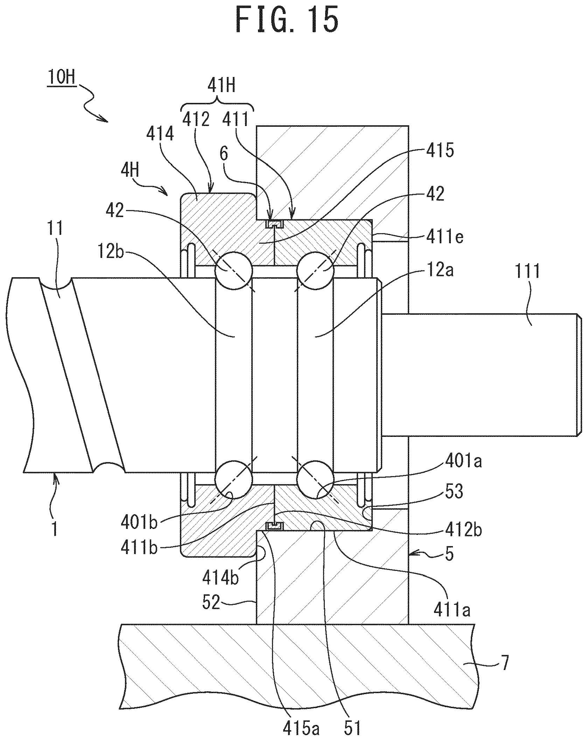

As illustrated in FIG. 15, in a ball screw device 10H according to a ninth embodiment, an outer ring 41H of a rolling bearing 4H is composed of the two divided parts 411 and 412 into which the outer ring 41H is divided between the two rows of outer ring raceway grooves 401a and 401b. Furthermore, the outer ring 41H has a detent 6 that connects the two divided parts 411 and 412.

The first divided part 411 has an outer circumferential surface 411a fitted into an inner circumferential surface 51 of a housing 5. The second divided part 412 is composed of a large diameter portion 414 having an outer diameter larger than that of the first divided part 411 and a small diameter portion 415 having the same outer diameter as the first divided part 411. The small diameter portion 415 has an outer circumferential surface 415a fitted into the inner circumferential surface 51 of the housing 5.

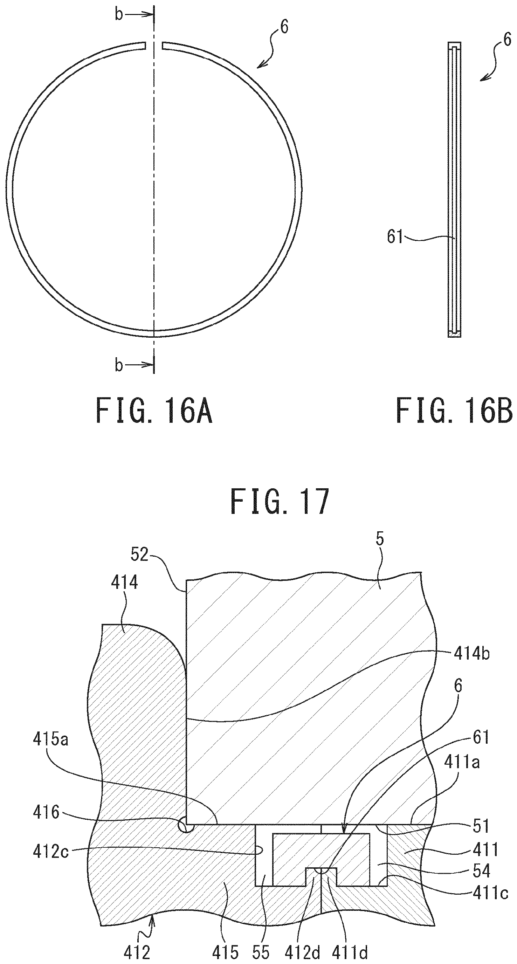

As illustrated in FIG. 16, the detent 6 is a partially opened annular member, and has a circumferential groove 61 on the center of its inner circumferential surface in a width direction. Examples of a material of the detent 6 include carbon steel, stainless steel, beryllium copper, Inconel, etc. Furthermore, in a case where fretting does not occur between the housing and the outer ring, synthetic resin such as POM can also be used.

As illustrated in FIG. 17, the first divided part 411 has a notch (a groove) 411c extending to the outer circumferential surface 411a on an entire outer circumferential surface of an axial end surface 411b in contact with the second divided part 412. Furthermore, a radially outwardly projecting convex portion 411d is formed on the side of the axial end surface 411b of the notch 411c. Accordingly, with the first divided part 411 fitted into the inner circumferential surface 51 of the housing 5, a groove 54 is formed by the inner circumferential surface 51 and the notch 411c.

The second divided part 412 has a notch (a groove) 412c extending to the outer circumferential surface 415a of the small diameter portion 415 on an entire outer circumferential surface of an axial end surface 412b in contact with the first divided part 411. Furthermore, a radially outwardly projecting convex portion 412d is formed on the side of the axial end surface 412b of the notch 412c. Accordingly, with the small diameter portion 415 of the second divided part 412 fitted into the inner circumferential surface 51 of the housing 5, a groove 55 is formed by the inner circumferential surface 51 and the notch 412c.

Furthermore, the second divided part 412 has an undercut 416 at a corner formed by an axial end surface 414b of the large diameter portion 414 on the side of the small diameter portion 415 and the outer circumferential surface 415a of the small diameter portion 415.

The convex portion 411d of the first divided part 411 and the convex portion 412d of the second divided part 412 have the same dimensions, and a total value of respective widths of these convex portions is slightly greater than the width of the circumferential groove 61 of the detent 6. Accordingly, the axial end surfaces 411b and 412b of the first and second divided parts 411 and 412 are brought into contact with each other, and the detent 6 is opened, and then the convex portions 411d and 412d are fitted into the circumferential groove 61, thus the two divided parts 411 and 412 are restrained from moving both in the radial direction and in the axial direction by the detent 6.

Furthermore, the rolling bearing 4H is subjected to a DF preload by the offset preloading method.

Except for these described above, the ball screw device 10H has the same configuration as the ball screw device 10 according to the first embodiment.

When the ball screw device 10H is in use, as illustrated in FIG. 15, the first divided part 411 of the outer ring 41H with the two divided parts 411 and 412 connected by the detent 6 and the small diameter portion 415 of the second divided part 412 are fitted into the inner circumferential surface 51 of the housing 5 fixed to a base 7, and an axial end surface 411e on the side opposite to the axial end surface 411b is pressed against an uneven surface 53 of the housing 5.

Furthermore, with the axial end surface 414b of the second divided part 412 (in the small diameter portion 415 side of the large diameter portion 414) facing an axial end surface 52 of the housing 5, the outer ring 41H is fixed to the housing 5 with bolts inserted through bolt insertion holes provided on the outer edge of the second divided part 412.

It is to be noted that, for example, a deep groove ball bearing is attached to the small diameter portion 111 of the other axial end 13, and its outer ring is fixed to the base 7 through the housing.

In the ball screw device 10H according to the present embodiment, the two divided parts 411 and 412 are restrained from moving both in the radial direction and in the axial direction by the detent 6; therefore, if, with the two divided parts 411 and 412 installed to the housing 5, there is a gap between the axial end surface 414b of the second divided part 412 of the outer ring 41H and the axial end surface 52 of the housing 5, it is not a problem.

Furthermore, the outer circumferential surface 415a of the small diameter portion 415 of the second divided part 412 is fitted into the inner circumferential surface 51 of the housing 5, and a corner formed by the inner circumferential surface 51 and the axial end surface 52 of the housing 5 is placed in the undercut 416, thus it is possible to easily perform alignment of the outer ring 41H.

It is to be noted that in the ball screw device 10H according to the present embodiment, a total value of respective widths of the convex portions 411d and 412d of the first and second divided parts 411 and 412 is configured to be slightly greater than the width of the circumferential groove 61 of the detent 6; however, it may be equal to or slightly smaller than the width of the circumferential groove 61 of the detent 6.

Then, in a case where the total value of the widths is smaller than the width of the circumferential groove 61, when the outer ring 41H is fixed to the housing 5 with the bolts, by tightening up the bolts, the convex portions 411d and 412d in the circumferential groove 61 are moved to the side of the uneven surface 53 of the housing 5; therefore, it is possible to bring the axial end surface 414b of the second divided part 412 into close contact with the axial end surface 52 of the housing 5.

[Invention]

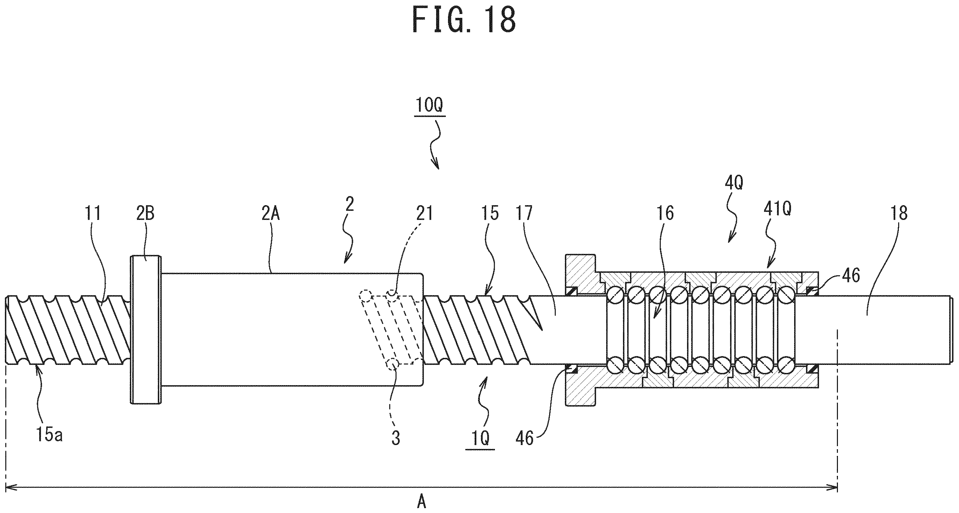

As illustrated in FIG. 18, a ball screw device 10Q according to the invention includes a ball screw that includes a threaded shaft 1Q, the nut 2, and the balls (the first balls) 3 and an outer ring 41Q of a rolling bearing 4Q.

The threaded shaft 1Q is divided into a helical groove formation portion 15 with the helical groove 11 formed on its outer circumferential surface, a raceway groove formation portion 16 with inner ring raceway grooves of the rolling bearing 4Q formed, a screw shank 17 between the helical groove formation portion 15 and the raceway groove formation portion 16, and a motor connection end 18. The raceway groove formation portion 16 is covered with the outer ring 41Q. The motor connection end 18 is an axial end that continues from the raceway groove formation portion 16 on the side opposite to the screw shank 17.

The helical groove formation portion 15, the raceway groove formation portion 16, the screw shank 17, and the motor connection end 18 have the same diameter of a circle that forms their outer circumferential surface. That is, the outer diameter of an outer circumferential surface of the threaded shaft 1Q is uniform entirely in the axial direction, except for a chamfered portion. Both ends of the threaded shaft 1Q are not subjected to a stepped cutting process. The threaded shaft 1Q does not have the small diameter portion 111 unlike the threaded shaft 1 illustrated in FIG. 1.

Furthermore, an axial area A of the threaded shaft 1Q illustrated in FIG. 18, i.e., an area from an end 15a of the helical groove formation portion 15 on the side opposite to the screw shank 17 to a boundary position of the raceway groove formation portion 16 with the motor connection end 18 is subjected to heat treatment so that a retained austenite amount $\gamma_{RS}$ [volume%] of a surface satisfies the following Equation (1). The motor connection end 18 is subjected to induction hardening and induction tempering.

$$\gamma_{RS} = \frac{\alpha_S + 1.14}{0.238} \cdots (1)$$

(In the above equation, $\alpha_S$ denotes the life ratio of the helical groove of the threaded shaft to the required life of the ball screw device, and $\alpha_S$ is greater than 1.) Specifically, by using high-carbon bearing steel as a material of the threaded shaft 1Q and subjecting the area A to induction heat treatment, a retained austenite amount $\gamma_{RS}$ [volume%] of a surface of the area A satisfies the above Equation (1).

Furthermore, a material of the nut 2 is case hardening steel, and is subjected to carbonitriding treatment. A material of the balls 3 is bearing steel, and is subjected to immersion quenching. Respective retained austenite amounts $\gamma_R$ of the threaded shaft 1Q, the nut 2, and the balls 3 satisfy "$\gamma_{RS} > \gamma_{RN} > \gamma_{RB}$".

As illustrated in FIG. 18, the helical groove 21 is formed on the inner circumferential surface of the nut 2. Furthermore, the nut 2 is composed of the cylindrical portion 2A and the flange portion 2B. The flange portion 2B is provided with a bolt insertion hole that penetrates in the axial direction.

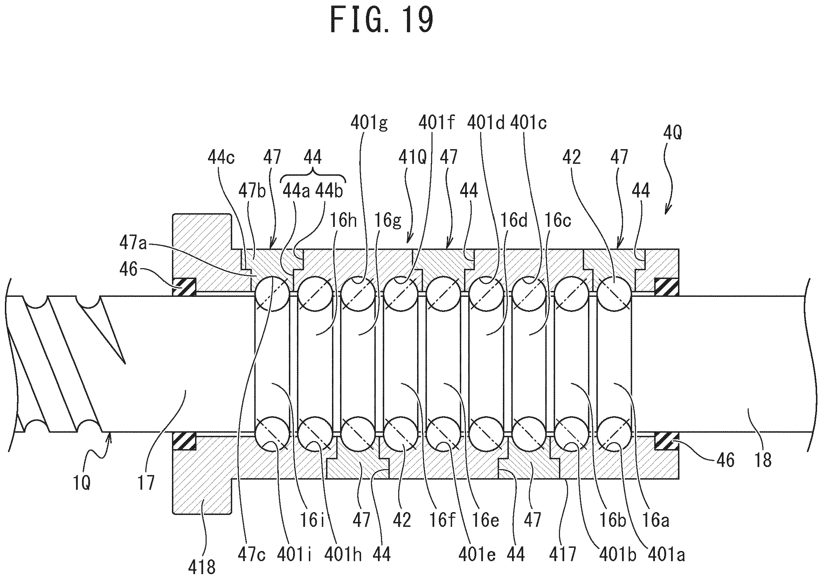

As illustrated in FIG. 19, the rolling bearing 4Q is composed of nine rows of inner ring raceway grooves 16a to 16i formed on the raceway groove formation portion 16 of the threaded shaft 1Q, the outer ring 41Q having outer ring raceway grooves 401a to 401i that face the inner ring raceway grooves 16a to 16i, the multiple balls (the second balls) 42, and a pair of seals 46. The multiple balls 42 are rollably arranged between the inner ring raceway grooves 16a to 16i and the outer ring raceway grooves 401a to 401i. The seals 46 are each in contact with the side of the raceway groove formation portion 16 close to the screw shank 17 and the motor connection end 18 of the threaded shaft 1Q.

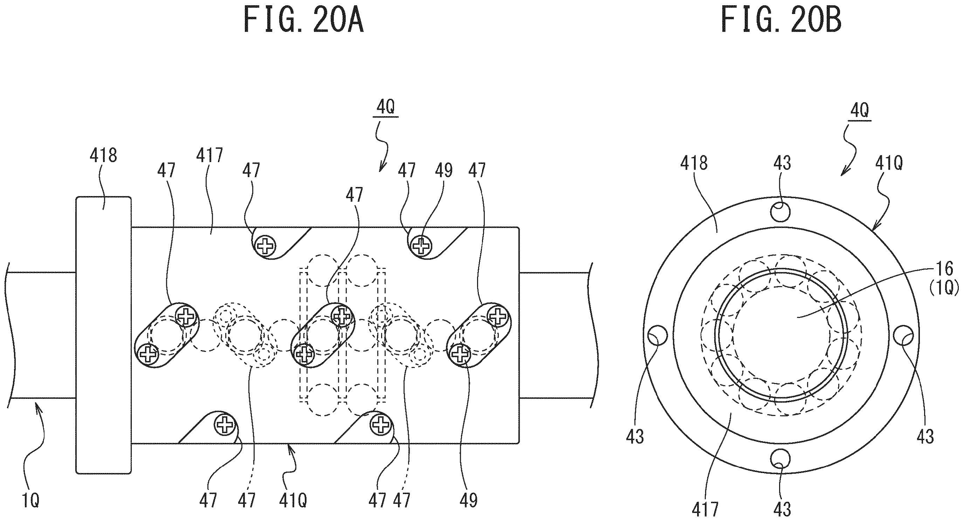

As illustrated in FIGS. 19 and 20, the outer ring 41Q is composed of a cylindrical portion 417 and a flange portion 418. The outer ring raceway grooves 401a to 401i are formed on the cylindrical portion 417. The flange portion 418 is provided with the bolt insertion holes 43 that penetrate in the axial direction. Furthermore, the cylindrical portion 417 is provided with the rolling element insertion holes 44 penetrating from its outer circumferential surface to the outer ring raceway grooves 401a to 401i. The nine rolling element insertion holes 44 of the outer ring 41Q are formed in positions of the cylindrical portion 417 so that each rolling element insertion hole is shifted by 90° from its axially adjacent rolling element insertion holes. Each rolling element insertion hole 44 is covered with a lid 47.

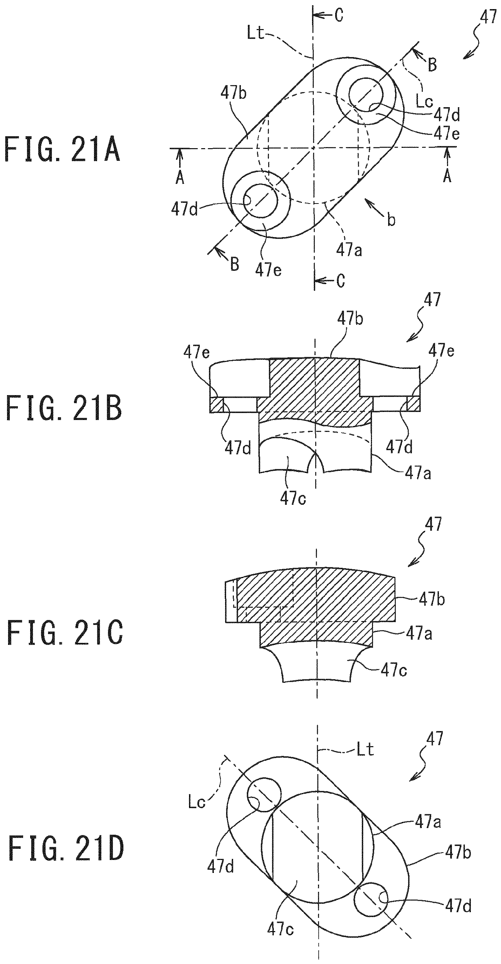

As illustrated in FIG. 21, the lid 47 is composed of a shaft 47a and a head 47b, and a distal end surface (an inner surface of a lid portion) 47c of the shaft 47a is formed into a concave shape to serve as part of corresponding one of the outer ring raceway grooves 401a to 401i. The head 47b is provided with bolt insertion holes 47d and counterbores 47e. A straight line Lc indicating a longer direction of an ellipse that forms the head 47b is tilted to a straight line Lt perpendicular to the axial direction of the outer ring 41Q. A cross-section of the lid 47 along a line A-A in FIG. 21A is seen in FIG. 19.

As illustrated in FIG. 19, each rolling element insertion hole 44 of the outer ring 41Q is composed of the inside portion 44a having a shape fitted with the shaft 47a of the lid 47 and the outside portion 44b having a shape fitted with the head 47b. Furthermore, on a boundary surface 44c between the inside portion 44a and the outside portion 44b of the rolling element insertion hole 44, female screws are formed at positions corresponding to the bolt insertion holes 47d of the lid 47.

As illustrated in FIG. 19, after the balls 42 are put into raceways composed of the inner ring raceway grooves 16a to 16i and the outer ring raceway grooves 401a to 401i from the rolling element insertion holes 44, the lids 47 are fitted into the rolling element insertion holes 44. After that, as illustrated in FIG. 20, by putting bolts 49 into the bolt insertion holes 47d and screwing the bolts 49 into the female screws of the outer ring 41Q, the lids 47 are secured not to come out of the rolling element insertion holes 44.

The rolling bearing 4Q may be a full-ball bearing without a cage, or synthetic resin or metal spacer-balls or synthetic resin holding pieces may be provided between the balls 42.

Furthermore, illustrated in FIG. 19, a portion between two raceways of the rolling bearing 4Q on the side of the motor connection end 18 (raceways formed by the outer ring raceway grooves 401a and 401b and the inner ring raceway grooves 16a and 16b) is subjected to a DB preload by the offset preloading method. That is, a raceway on the side closest to the motor connection end 18 (a raceway formed by the outer ring raceway groove 401a and the inner ring raceway groove 16a) is a raceway for preload application, and has a contact angle opposite to those of the other raceways (multiple rows of raceways for load bearing).

Then, the ball screw device 10Q is used by fixing the nut 2 to a member to be linearly moved, fixing the outer ring 41Q of the rolling bearing 4Q to the base through the housing, and connecting the motor to the motor connection end (one axial end) 18 of the threaded shaft 1Q. With the cylindrical portion 417 put into the housing, and the flange portion 418 pressed against the axial end surface of the housing, the outer ring 41Q is fixed to the housing with the bolts put through the bolt insertion holes 43 of the flange portion 418.

For example, a deep groove ball bearing is attached to the end 15a of the helical groove formation portion 15, and its outer ring is fixed to the base through the housing.

[Tenth embodiment]

In the ball screw device 10Q according to the tenth embodiment, the rolling bearing 4Q with the preload applied is integral with the ball screw; therefore, by applying a preload depending on a requirement to the rolling bearing 4Q in advance, the need for a preload adjustment is eliminated when the ball screw device 10Q is installed in a machine tool or the like at the client's.

In a case where the application of a preload is performed at the client's, an assembly accuracy error may increase, which may reduce the rotation accuracy. On the other hand, the ball screw device 10Q according to the tenth embodiment does not require a preload adjustment when the ball screw device 10Q is installed in a machine tool or the like at the client's; therefore, it is not necessary to worry about reduction of the rotation accuracy associated with a preload adjustment. As compared with a case where an inner ring of a rolling bearing is attached to a threaded shaft with a locknut, by not using a locknut, an effect of suppressing centrifugal whirling of a motor installation portion is also obtained. Accordingly, when the ball screw device 10Q is installed in a machine at the client's, a run-out adjustment is not necessary or is made easier.

Furthermore, the outer ring 41Q is provided with the rolling element insertion holes 44; therefore, the balls 42 can be easily inserted between the inner ring raceway grooves 16a to 16i and the outer ring raceway grooves 401a to 401i from the side of an outer circumferential surface of the outer ring 41Q. Accordingly, after the outer ring raceway grooves 401a to 401i are set to face the inner ring raceway grooves 16a to 16i by putting the outer ring 41Q on the one axial end 12 of the threaded shaft 1Q, the balls 42 can be arranged between the two raceway grooves.

Therefore, it is possible to reduce the trouble of having to assemble the rolling bearing as compared with a ball screw device where the outer ring 41Q embedded with the balls 42 has to be put on the motor connection end 18 that is one axial end of the threaded shaft 1Q. Furthermore, the load capacity of the rolling bearing 4Q in the axial direction and the radial direction can also be changed by changing the diameter of the balls 42 used without modifying the inner ring raceway grooves 16a to 16i and the outer ring raceway grooves 401a to 401i.

Moreover, the distal end surfaces 47c of the lids 47 are formed into a concave shape to serve as part of the outer ring raceway grooves 401a to 401i, and therefore does not hinder a function as the rolling bearing 4Q.

Furthermore, the ball screw device 10Q according to the tenth embodiment includes the rolling bearing 4Q having nine rows of raceways; the nine rows of inner ring raceway grooves 16a to 16i are formed on the threaded shaft 1Q, and the nine rows of outer ring raceway grooves 401a to 401i are formed on one outer ring 41Q. Accordingly, the number of components is reduced, as compared with a case where nine rolling bearings are installed, as separate components, in a ball screw. Thus, the surface of a component is not necessarily uniform, and micro-deformation is caused by contact. The ball screw device 10Q has less chance of contact between components, and therefore is less likely to have deformation, and stiffness is improved.

Moreover, in a case where the raceway groove formation portion 16 of the threaded shaft 1 is subjected to a high load to the right-hand side in FIGS. 18 and 19 when the ball screw device 10Q is in use, the rolling bearing 4Q is subjected to an axially non-uniform load (a higher load on the side axially closer to the nut 2 than the side farther away from the nut 2). In this case, in the rolling bearing 4Q, of the nine rows of raceways, eight rows of raceways other than the raceway for preload application on the side closest to the motor connection end 18 bear the load; therefore, a load per row is reduced. Accordingly, it is possible to prevent the balls 42 existing on the raceway of the rolling bearing 4Q on the side of the flange portion 418 subjected to the highest load from being damaged early.

Furthermore, the nine rows of rolling element insertion holes 44 are arranged evenly in the circumferential direction of the outer ring 41Q, thus deformation of the outer ring 41Q in a plane perpendicular to the axis when subjected to an axial load can be uniformized. Accordingly, it is possible to increase the life of the outer ring 41Q.

In this way, in a case where a raceway groove formation portion of a threaded shaft of a ball screw device is subjected to an axially non-uniform and high load, it is preferable to reduce a load per row in such a manner that the number of raceways of a rolling bearing is three or more rows, and, of the three or more rows of raceways, one row (on the side farthest away from the point of application of the load) is set as a raceway for preload application, and the other multiple rows (on the side close to the point of application of the load) are set as a raceway for load bearing.

Moreover, the outer diameter of the outer circumferential surface of the threaded shaft 1Q is uniform entirely in the axial direction except for the chamfered portion, and the threaded shaft 1Q is not subjected to a stepped cutting process. This prevents the occurrence of the concentration of stress on the end 15a of the helical groove formation portion 15 and the motor connection end 18; therefore, as compared with a threaded shaft subjected to a stepped cutting process, stiffness to twisting or bending of the end 15a of the helical groove formation portion 15 and the motor connection end 18 is improved, thus the durability is improved.

Furthermore, the outer diameter of the outer circumferential surface of the threaded shaft 1Q is the same between the helical groove formation portion 15 and the raceway groove formation portion 16; therefore, as compared with a case where the outer diameter of the outer circumferential surface of the threaded shaft 1Q differs between the outer diameter of the helical groove formation portion 15 and the raceway groove formation portion 16, the concentration of stress is avoided, thus the durability is improved, and the processing cost is reduced.

Moreover, there is no residual stress generated at the time of a stepped cutting process on the end 15a of the helical groove formation portion 15 and the motor connection end 18; therefore, deformation does not occur on respective ends of the helical groove formation portion 15 and the motor connection end 18, thus the run-out accuracy of these ends becomes better. And, by not performing a stepped cutting process, the processing cost can be reduced.

Furthermore, in the ball screw device 10Q according to the tenth embodiment, in the axial area A of the threaded shaft 1Q, i.e., in all of the helical groove formation portion 15, the raceway groove formation portion 16, and the screw shank 17, a retained austenite amount $\gamma_{RS}$ [volume%] of a surface satisfies the above Equation (1); therefore, both of the ball screw part and the bearing part become durable.

It is to be noted that lips of the seals 46 come in contact with and slide on the screw shank 17; however, a retained austenite amount $\gamma_{RS}$ [volume%] of the screw shank 17 satisfies the above Equation (1), thus abrasion of the screw shank 17 caused by the seals 46 can be reduced.

[Eleventh Embodiment]

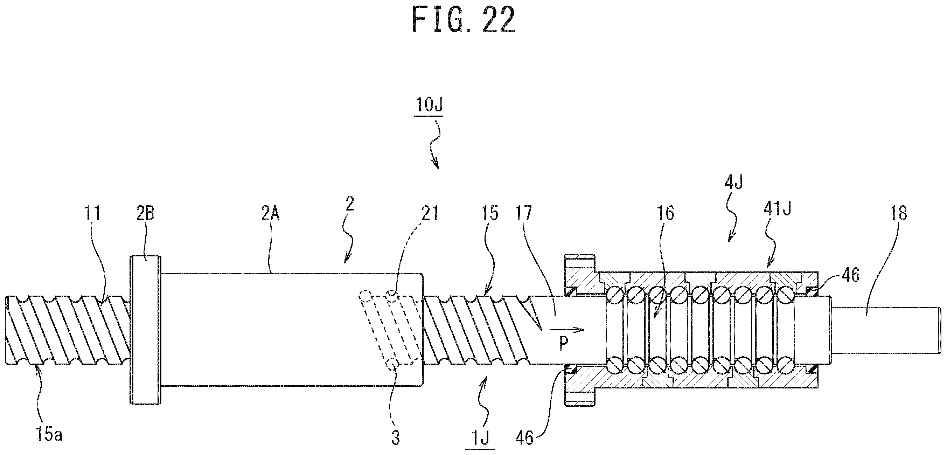

As illustrated in FIG. 22, a ball screw device 10J according to an eleventh embodiment includes a ball screw that includes a threaded shaft 1J, the nut 2, and the balls (the first balls) 3 and an outer ring 41J of a rolling bearing 4J.

The threaded shaft 1J is divided into the helical groove formation portion 15 with the helical groove 11 formed on its outer circumferential surface, the raceway groove formation portion 16 with inner ring raceway grooves of the rolling bearing 4J formed, the screw shank 17 between the helical groove formation portion 15 and the raceway groove formation portion 16, and the motor connection end 18. The raceway groove formation portion 16 is covered with the outer ring 41J. The motor connection end 18 is an axial end that continues from the raceway groove formation portion 16 on the side opposite to the screw shank 17.

The helical groove formation portion 15, the raceway groove formation portion 16, and the screw shank 17 have the same diameter of a circle that forms their outer circumferential surface. The diameter of the motor connection end 18 is smaller than the outer diameter of the raceway groove formation portion 16. That is, the motor connection end 18 is a small diameter portion.

As illustrated in FIG. 22, the helical groove 21 is formed on the inner circumferential surface of the nut 2. Furthermore, the nut 2 is composed of the cylindrical portion 2A and the flange portion 2B. The flange portion 2B is provided with a bolt insertion hole that penetrates in the axial direction.

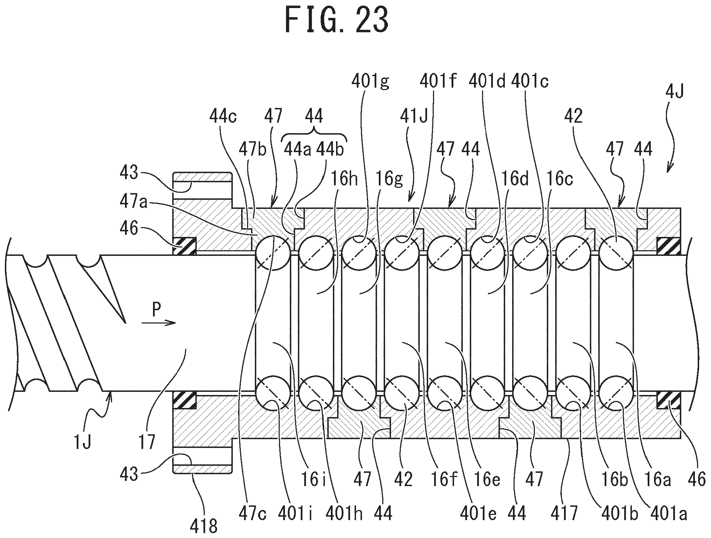

As illustrated in FIG. 23, the rolling bearing 4J is composed of the nine rows of inner ring raceway grooves 16a to 16i formed on the raceway groove formation portion 16 of the threaded shaft 1J, the outer ring 41J having the outer ring raceway grooves 401a to 401i that face the inner ring raceway grooves 16a to 16i, the multiple balls (the second balls) 42, and the pair of seals 46. The multiple balls 42 are rollably arranged between the inner ring raceway grooves 16a to 16i and the outer ring raceway grooves 401a to 401i. The multiple balls 42 are made of metal or ceramics . The seals 46 are each in contact with the side of the raceway groove formation portion 16 close to the screw shank 17 and the motor connection end 18 of the threaded shaft 1J.

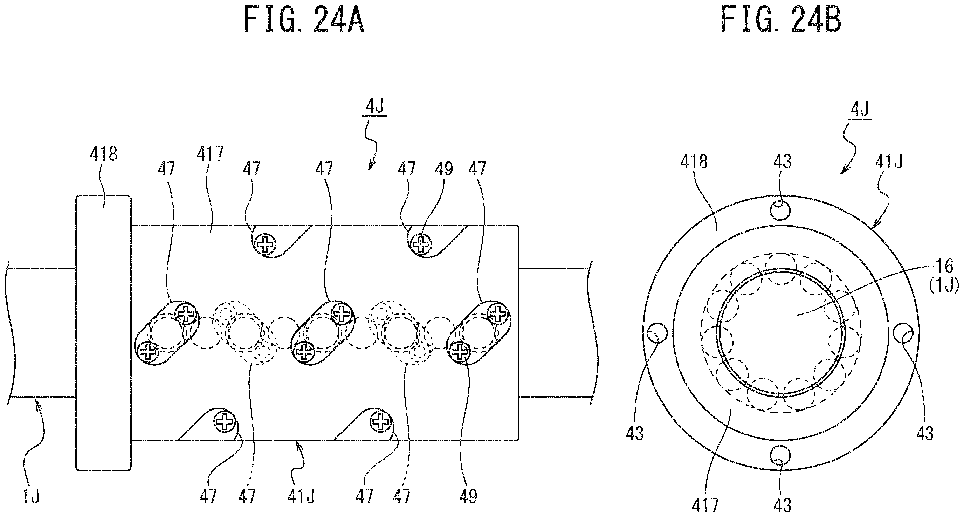

As illustrated in FIGS. 23 and 24, the outer ring 41J is composed of the cylindrical portion 417 and the flange portion 418. The outer ring raceway grooves 401a to 401i are formed on the cylindrical portion 417. The flange portion 418 is provided with the bolt insertion holes 43 that penetrate in the axial direction. Furthermore, the cylindrical portion 417 is provided with the rolling element insertion holes 44 penetrating from its outer circumferential surface to the outer ring raceway grooves 401a to 401i. The nine rolling element insertion holes 44 of the outer ring 41J are formed in positions of the cylindrical portion 417 so that each rolling element insertion hole is shifted by 90° from its axially adjacent rolling element insertion holes. Each rolling element insertion hole 44 is covered with the lid 47.

As illustrated in FIG. 21, the lid 47 is composed of the shaft 47a and the head 47b, and the distal end surface (an inner surface of a lid portion) 47c of the shaft 47a is formed into a concave shape to serve as part of corresponding one of the outer ring raceway grooves 401a to 401i. The head 47b is provided with the bolt insertion holes 47d and the counterbores 47e. The straight line Lc indicating a longer direction of an ellipse that forms the head 47b is tilted to the straight line Lt perpendicular to the axial direction of the outer ring 41J. The cross-section along the line A-A in FIG. 21A is seen in FIG. 23.

As illustrated in FIG. 23, each rolling element insertion hole 44 of the outer ring 41J is composed of the inside portion 44a having a shape fitted with the shaft 47a of the lid 47 and the outside portion 44b having a shape fitted with the head 47b. Furthermore, on the boundary surface 44c between the inside portion 44a and the outside portion 44b of the rolling element insertion hole 44, female screws are formed at positions corresponding to the bolt insertion holes 47d.

As illustrated in FIG. 23, after the balls 42 are put into the raceways composed of the inner ring raceway grooves 16a to 16i and the outer ring raceway grooves 401a to 401i from the rolling element insertion holes 44, the lids 47 are fitted into the rolling element insertion holes 44. After that, as illustrated in FIG. 24, by putting the bolts 49 into the bolt insertion holes 47d and screwing the bolts 49 into the female screws of the outer ring 41J, the lids 47 are secured not to come out of the rolling element insertion holes 44.

The rolling bearing 4J may be a full-ball bearing without a cage, or synthetic resin or metal spacer-balls or synthetic resin holding pieces may be provided between the balls 42.

Furthermore, illustrated in FIG. 23, between two raceways of the rolling bearing 4J on the side of the motor connection end 18 (raceways formed by the outer ring raceway grooves 401a and 401b and the inner ring raceway grooves 16a and 16b), the distance between adjacent groove bottoms of the outer ring raceway grooves is greater than that of the inner ring raceway grooves. Between the other raceways, the distance between adjacent groove bottoms is the same in the outer ring raceway grooves and the inner ring raceway grooves . Accordingly, the rolling bearing 4J is subjected to a DB preload by the offset preloading method. That is, a raceway on the side closest to the motor connection end 18 (a raceway formed by the outer ring raceway groove 401a and the inner ring raceway groove 16a) is a raceway for preload application, and has a contact angle opposite to those of the other raceways (multiple rows of raceways for load bearing).

The ball screw device 10J is used, for example, by fixing the nut 2 to a platen of a mold clamping unit of an electric injection molding machine, fixing the outer ring 41J of the rolling bearing 4J to the base through the housing, and connecting the motor to the motor connection end (one axial end) 18 of the threaded shaft 1J. With the cylindrical portion 417 put into the housing, and the flange portion 418 pressed against the axial end surface of the housing, the outer ring 41J is fixed to the housing with the bolts put through the bolt insertion holes 43 of the flange portion 418.

In the ball screw device 10J according to the eleventh embodiment, the rolling bearing 4J with the preload applied is integral with the ball screw; therefore, by applying a preload depending on a requirement to the rolling bearing 4J in advance, the need for a preload adjustment is eliminated when the ball screw device 10J is installed in a machine tool or the like at the client's.

In a case where the application of a preload is performed at the client's, an assembly accuracy error may increase, which may reduce the rotation accuracy. On the other hand, the ball screw device 10J according to the eleventh embodiment does not require a preload adjustment when the ball screw device 10J is installed in a machine tool or the like at the client's; therefore, it is not necessary to worry about reduction of the rotation accuracy associated with a preload adjustment. As compared with a case where an inner ring of a rolling bearing is attached to a threaded shaft with a locknut, by not using a locknut, an effect of suppressing centrifugal whirling of a motor installation portion is also obtained. Accordingly, when the ball screw device 10J is installed in a machine at the client's, a run-out adjustment is not necessary or is made easier.

Furthermore, the outer ring 41J is provided with the rolling element insertion holes 44; therefore, the balls 42 can be easily inserted between the inner ring raceway grooves 16a to 16i and the outer ring raceway grooves 401a to 401i from the side of an outer circumferential surface of the outer ring 41J. Accordingly, after the outer ring raceway grooves 401a to 401i are set to face the inner ring raceway grooves 16a to 16i by putting the outer ring 41J on the one axial end 12 of the threaded shaft 1J, the balls 42 can be arranged between the two raceway grooves.

Therefore, it is possible to reduce the trouble of having to assemble the rolling bearing as compared with a ball screw device where the outer ring 41J embedded with the balls 42 has to be put on the motor connection end 18 that is one axial end of the threaded shaft 1J. Furthermore, the load capacity of the rolling bearing 4J in the axial direction and the radial direction can also be changed by changing the diameter of the balls 42 used without modifying the inner ring raceway grooves 16a to 16i and the outer ring raceway grooves 401a to 401i.

Moreover, the distal end surfaces 47c of the lids 47 are formed into a concave shape to serve as part of the outer ring raceway grooves 401a to 401i, and therefore does not hinder a function as the rolling bearing 4J.

Furthermore, the ball screw device 10J according to the eleventh embodiment includes the rolling bearing 4J having nine rows of raceways; the nine rows of inner ring raceway grooves 16a to 16i are formed on the threaded shaft 1J, and the nine rows of outer ring raceway grooves 401a to 401i are formed on one outer ring 41J. Accordingly, the number of components is reduced, as compared with a case where nine rolling bearings are installed, as separate components, in a ball screw. The surface of a component is not necessarily uniform, and micro-deformation is caused by contact. Thus, the ball screw device 10J has less chance of contact between components, and therefore is less likely to have deformation, and stiffness is improved.

Moreover, the outer diameter of the outer circumferential surface of the threaded shaft 1J is the same between the helical groove formation portion 15 and the raceway groove formation portion 16; therefore, as compared with a case where the outer diameter of the outer circumferential surface of the threaded shaft 1J differs between the outer diameter of the helical groove formation portion 15 and the raceway groove formation portion 16, the concentration of stress is avoided, thus the durability is improved, and the processing cost is reduced.

Furthermore, in a case where the nut 2 is fixed to the platen, the raceway groove formation portion 16 of the threaded shaft 1J is subjected to a high load in a direction indicated by an arrow P in FIGS. 22 and 23 when the ball screw device 10J is in use, and the rolling bearing 4J is subjected to an axially non-uniform load (a higher load on the side axially closer to the nut 2 than the side farther away from the nut 2).

On the other hand, the rolling bearing 4J has nine rows of raceways, and eight rows of raceways other than the raceway for preload application on the side closest to the motor connection end 18 bear the load; therefore, a load per row is reduced. Accordingly, it is possible to prevent the balls 42 existing on the raceway of the rolling bearing 4J on the side of the flange portion 418 subjected to the highest load from being damaged early. Furthermore, the nine rows of rolling element insertion holes 44 are arranged evenly in the circumferential direction of the outer ring 41J, thus deformation of the outer ring 41J in a plane perpendicular to the axis when subjected to an axial load can be uniformized. Accordingly, it is possible to increase the life of the outer ring 41J.

From the above, the ball screw device 10J according to the present embodiment can increase the life of the rolling bearing 4J in a case where the ball screw device 10J is used for applying an axially non-uniform load to the rolling bearing 4J.

[Twelfth Embodiment]

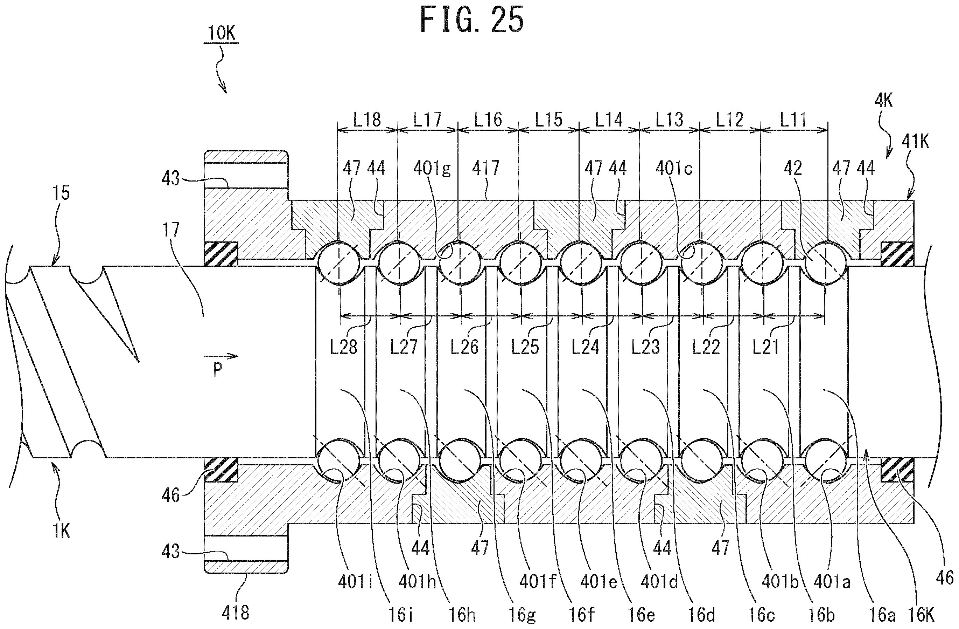

FIG. 25 illustrates a rolling bearing 4K included in a ball screw device 10K according to a twelfth embodiment. The ball screw device 10K according to the twelfth embodiment includes an outer ring 41K different from the outer ring 41J of the ball screw device 10J according to the eleventh embodiment. A threaded shaft 1K of the ball screw device 10K has a raceway groove formation portion 16K different from a raceway groove formation portion 16 of the threaded shaft 1J of the ball screw device 10J. Except for these, the ball screw device 10K according to the twelfth embodiment has the same configuration as the ball screw device 10J according to the eleventh embodiment.

As illustrated in FIG. 25, the rolling bearing 4K has nine rows of raceways, and the groove cross-sectional shape of the inner ring raceway grooves 16a to 16i and the outer ring raceway grooves 401a to 401i that form the raceways is a Gothic arc shape.

Between, of the nine rows of raceways of the rolling bearing 4K, two raceways (raceways formed by the outer ring raceway grooves 401a and 401b and the inner ring raceway grooves 16a and 16b) located at positions farthest away from the flange portion 418 (on the side of the motor connection end 18 illustrated in FIG. 22), a distance L11 between groove bottoms of the outer ring raceway grooves 401a and 401b is greater than a distance L21 between groove bottoms of the inner ring raceway grooves 16a and 16b.

Furthermore, a distance L12 between groove bottoms of the outer ring raceway grooves 401b and 401c is equal to a distance L22 between groove bottoms of the inner ring raceway grooves 16b and 16c. A distance L13 between groove bottoms of the outer ring raceway grooves 401c and 401d is equal to a distance L23 between groove bottoms of the inner ring raceway grooves 16c and 16d. A distance L14 between groove bottoms of the outer ring raceway grooves 401d and 401e is equal to a distance L24 between groove bottoms of the inner ring raceway grooves 16d and 16e. A distance L15 between groove bottoms of the outer ring raceway grooves 401e and 401f is equal to a distance L25 between groove bottoms of the inner ring raceway grooves 16e and 16f.

A distance L16 between groove bottoms of the outer ring raceway grooves 401f and 401g is equal to a distance L26 between groove bottoms of the inner ring raceway grooves 16f and 16g. A distance L17 between groove bottoms of the outer ring raceway grooves 401g and 401h is equal to a distance L27 between groove bottoms of the inner ring raceway grooves 16g and 16h. The distance L14 between groove bottoms of the outer ring raceway grooves 401d and 401e is equal to the distance L24 between groove bottoms of the inner ring raceway grooves 16d and 16e.

Then, between, of the nine rows of raceways, two raceways (raceways formed by the outer ring raceway grooves 401h and 401i and the inner ring raceway grooves 16h and 16i) closest to the flange portion 418, a distance L18 between groove bottoms of the outer ring raceway grooves 401h and 401i is less than a distance L28 between groove bottoms of the inner ring raceway grooves 16h and 16i. Accordingly, the preload amount in, of the nine rows of raceway, the raceway closest to the flange portion 418 (the raceway formed by the outer ring raceway groove 401i and the inner ring raceway groove 16i) is smaller than those in the other eight raceways.

Except for the above-described points, the rolling bearing 4K has the same configuration as the rolling bearing 4J included in the ball screw device 10J according to the eleventh embodiment.

As with the ball screw device 10J according to the eleventh embodiment, this ball screw device 10K is also used, for example, by fixing the nut 2 to a platen of a mold clamping unit of an electric injection molding machine, fixing the outer ring 41K of the rolling bearing 4K to the base through the housing, and connecting the motor to the motor connection end (one axial end) 18 of the threaded shaft 1K. With the cylindrical portion 417 put into the housing, and the flange portion 418 pressed against the axial end surface of the housing, the outer ring 41K is fixed to the housing with the bolts put through the bolt insertion holes 43 of the flange portion 418.

As with the ball screw device 10J according to the eleventh embodiment, in this use state, the raceway groove formation portion 16K of the threaded shaft 1K is subjected to a load in a direction indicated by an arrow P in FIG. 25, and the rolling bearing 4K is subjected to an axially non-uniform load (a higher load on the side axially closer to the nut 2 than the opposite-flange side farther away from the nut 2).

Accordingly, deformation of a raceway on the side closer to the flange portion 418 becomes larger than that of a raceway on the side farther away from the flange portion 418. That is, in a case where the amount of preload is uniform in the axial direction, the amount of axial deformation of the rolling bearing becomes non-uniform. On the other hand, in the ball screw device 10K according to the twelfth embodiment, the amount of preload on, of the nine rows of raceways, the raceway closest to the flange portion 418 is smaller than those of the other eight raceways; therefore, the amount of axial deformation of the rolling bearing 4K is uniformized.

Furthermore, besides the above-described effects, the ball screw device 10K according to the twelfth embodiment has the same configuration as the ball screw device 10J according to the eleventh embodiment, and therefore can achieve the same effects as the ball screw device 10J.

[Thirteenth Embodiment]

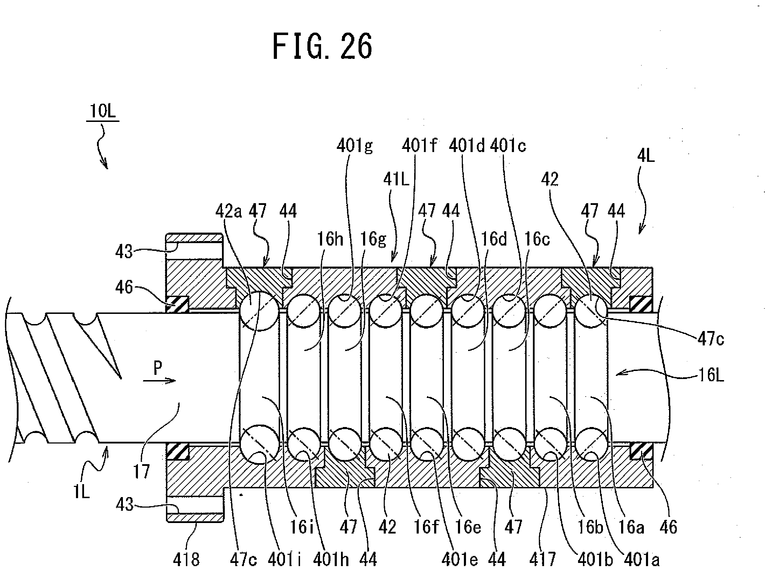

FIG. 26 illustrates a rolling bearing 4L included in a ball screw device 10L according to a thirteenth embodiment. The ball screw device 10L according to the thirteenth embodiment has the same configuration as the ball screw device 10J according to the eleventh embodiment, except for the rolling bearing 4L. The rolling bearing 4L included in the ball screw device 10L according to the thirteenth embodiment has the same configuration as the rolling bearing 4J included in the ball screw device 10J according to the eleventh embodiment, except for the following points.

As illustrated in FIG. 26, as with the rolling bearing 4J, in the rolling bearing 4L, the nine rows of inner ring raceway grooves 16a to 16i are formed on a raceway groove formation portion 16L of the threaded shaft 1L, and the nine rows of outer ring raceway grooves 401a to 401i are formed on an outer ring 41L. In the rolling bearing 4J, all the raceway grooves have the same shape and the same dimensions, and the balls 42 having the same dimensions are arranged.

On the other hand, in the rolling bearing 4K, the dimensions of the raceway grooves differ between the raceway closest to the flange portion 418 (the raceway formed by the inner ring raceway groove 16i and the outer ring raceway groove 401i) and the other raceways. Specifically, a larger raceway groove than those of the other raceways is formed on the raceway closest to the flange portion 418. That is, the width (the dimension in the axial direction) and depth of the inner ring raceway groove 16i are larger than the width and depth of the inner ring raceway grooves 16a to 16h. The width (the dimension in the axial direction) and depth of the outer ring raceway groove 401i are larger than the width and depth of the outer ring raceway groove 401a to 401h.

Then, the diameter of balls 42a arranged on the raceway closest to the flange portion 418 is larger than the diameter of the balls 42 arranged on the other raceways.

Furthermore, the distal end surface 47c of the lid 47 that covers the rolling element insertion hole 44 formed on the raceway closest to the flange portion 418 is formed into a concave shape to serve as part of the outer ring raceway groove 401i having the larger dimensions than the other raceway grooves, and is formed in different dimensions than the other lids 47.

In a case where this ball screw device 10L is put in the same use state as the ball screw device 10J according to the eleventh embodiment, deformation of a raceway on the side of the flange portion 418 (the side closer to the point of application of the load) becomes larger than that of a raceway on the side opposite to (the side farther away from) the flange portion 418 as with the ball screw device 10J according to the eleventh embodiment.

On the other hand, in the ball screw device 10L according to the thirteenth embodiment, the dimensions of the raceway closest to the flange portion 418 are configured to be larger than those of the other raceways, and the diameter of the ball 42a is configured to be larger than the diameter of the other balls 42; therefore, the load capacity of the raceway subjected to the highest load is greater than the other raceways. That is, a measure to increase the life of the raceway subjected to the highest load has been taken, thus the life of the entire rolling bearing 4L is increased.

Furthermore, besides the above-described effects, the ball screw device 10L according to the thirteenth embodiment has the same configuration as the ball screw device 10J according to the eleventh embodiment, and therefore can achieve the same effects as the ball screw device 10J.

[Fourteenth Embodiment]

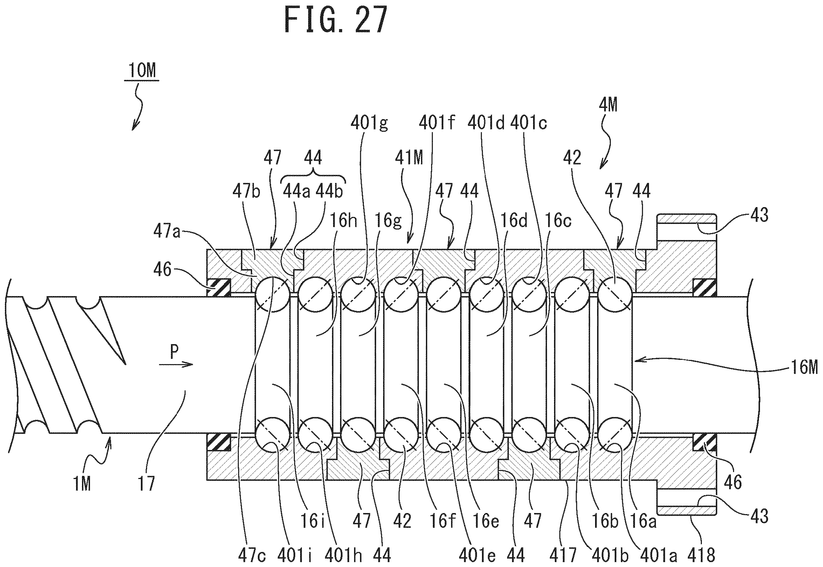

FIG. 27 illustrates a rolling bearing 4M included in a ball screw device 10M according to a fourteenth embodiment. The ball screw device 10M according to the fourteenth embodiment has the same configuration as the ball screw device 10J according to the eleventh embodiment, except for the rolling bearing 4M. The rolling bearing 4M included in the ball screw device 10M according to the fourteenth embodiment has the same configuration as the rolling bearing 4J included in the ball screw device 10J according to the eleventh embodiment, except for the following points.

In the outer ring 41J of the rolling bearing 4J, the flange portion 418 is provided at a position closest to the nut 2; however, in an outer ring 41M of the rolling bearing 4M, the flange portion 418 is provided at a position farthest away from the nut 2.

In a case where this ball screw device 10M is put in the same use state as the ball screw device 10J according to the eleventh embodiment, a raceway groove formation portion 16M of the threaded shaft 1M is subjected to a load in a direction indicated by an arrow P in FIG. 27, and the rolling bearing 4M is subjected to an axially non-uniform load (a higher load on the side axially closer to the nut 2 than the side farther away from the nut 2).

On the other hand, in the ball screw device 10M according to the fourteenth embodiment, the flange portion 418 of the outer ring 41M of the rolling bearing 4M is provided at the position farthest away from the nut 2; therefore, the non-uniformity of the amount of axial deformation of the rolling bearing is improved as compared with the ball screw device 10J according to the eleventh embodiment where the flange portion 418 is provided at the position closest to the nut 2.

Furthermore, besides the above-described effects, the ball screw device 10M according to the fourteenth embodiment has the same configuration as the ball screw device 10J according to the eleventh embodiment, and therefore can achieve the same effects as the ball screw device 10J.

[Remarks about Tenth to Fourteenth Embodiments]

In the rolling bearing included in the ball screw device according to any of the tenth to fourteenth embodiments, apart from both axial ends of the cylindrical portion (a portion provided with the outer ring raceway grooves) 417 of the outer ring, there are no portions provided with no rolling element insertion holes 44; therefore, the flange portion 418 is provided on the axial end of the cylindrical portion 417 of the outer ring.

However, the arrangement of the rolling element insertion holes 44 may be changed so that there are no rolling element insertion holes 44 in a portion (an axially center part) other than the both axial ends of the cylindrical portion 417 of the outer ring, and a flange may be provided in this portion. In this case, the outer ring raceway grooves exist on the inner circumferential surface of the portion of the outer ring provided with the flange as well. Then, also in a case where the flange is arranged on the axially center part of the outer ring in this way, the non-uniformity of the amount of axial deformation of the rolling bearing is improved as compared with the ball screw device 10J according to the eleventh embodiment where the flange portion 418 is provided at the position closest to the nut 2.

In the rolling bearing included in the ball screw device according to any of the tenth to fourteenth embodiments, between, of the nine rows of raceways, two raceways farthest away from the point of application of the load, the distance L11 between groove bottoms of the outer ring raceway grooves 401a and 401b is configured to be greater than the distance L21 between groove bottoms of the inner ring raceway grooves 16a and 16b, thus the rolling bearing is subjected to a preload by the offset preloading method. That is, the rolling bearing has one row of raceway for preload application and the other eight rows of raceways.

However, the rolling bearing may have multiple rows of raceways for preload application; in that case, the other raceways more than the raceways for preload application are provided. Furthermore, the preload may be applied by a method other than the offset preloading method.

[Fifteenth Embodiment]

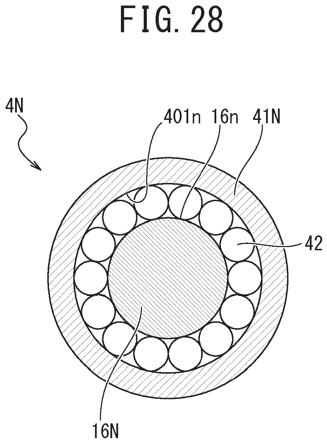

FIG. 28 illustrates a cross-section (a cross-section at a raceway groove bottom position) perpendicular to the axis direction of a rolling bearing 4N included in a ball screw device.

By configuring the cross-sectional area of an outer ring 41N at a groove bottom position of an outer ring raceway groove 401n and the cross-sectional area of a portion 16N provided with inner ring raceway grooves of a threaded shaft at a groove bottom position of an inner ring raceway groove 16n to be the same, a difference in the amount of deformation between the outer ring 41N and the portion 16N provided with the inner ring raceway grooves of the threaded shaft can be reduced as compared with a case where there is a difference in the cross-sectional area between the two.

Furthermore, even in a case where there is a difference in the cross-sectional area between the two, by reducing the difference, a difference in the amount of deformation between the outer ring 41N and the portion 16N provided with the inner ring raceway grooves of the threaded shaft can be reduced.

[Sixteenth Embodiment]

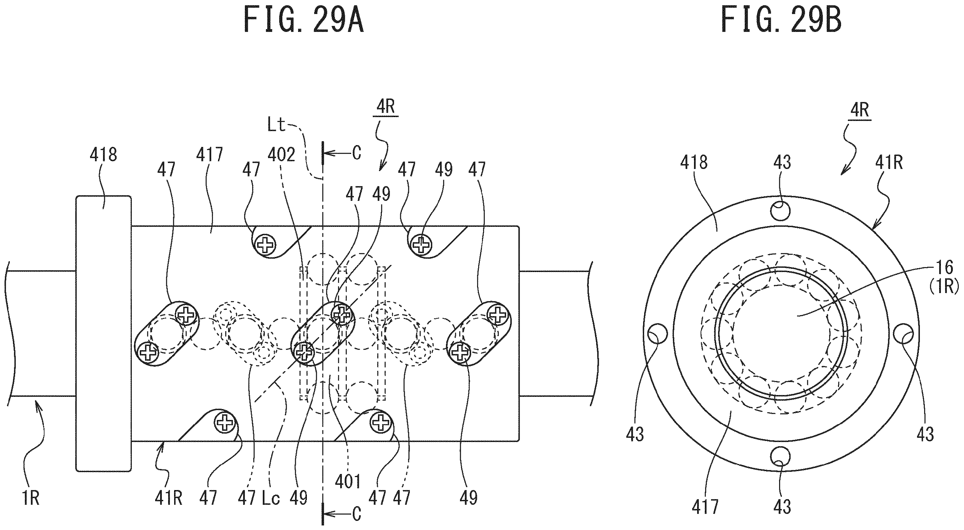

FIG. 29 illustrates a rolling bearing 4R included in a ball screw device 10R according to a sixteenth embodiment. The ball screw device 10R according to the sixteenth embodiment has the same configuration as the ball screw device 10J according to the eleventh embodiment, except for the rolling bearing 4R. The rolling bearing 4R included in the ball screw device 10R according to the sixteenth embodiment has the same configuration as the rolling bearing 4J included in the ball screw device 10J according to the eleventh embodiment, except for the following points.

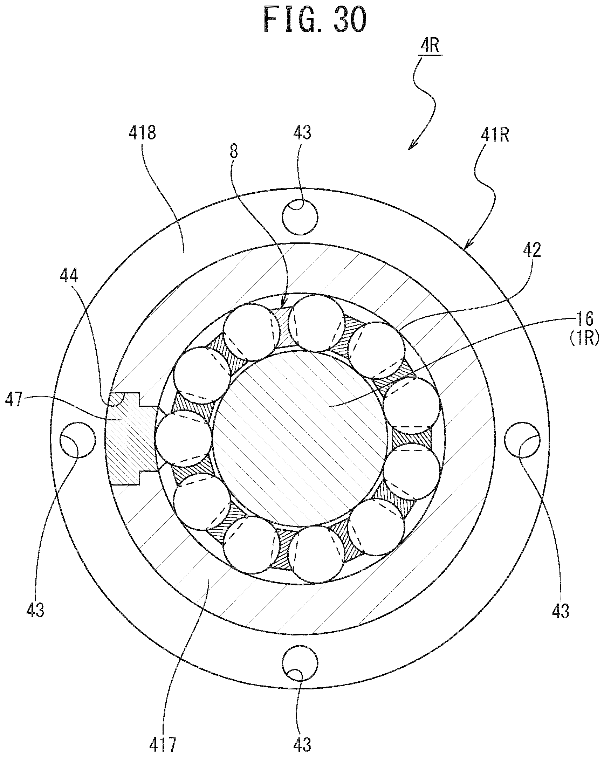

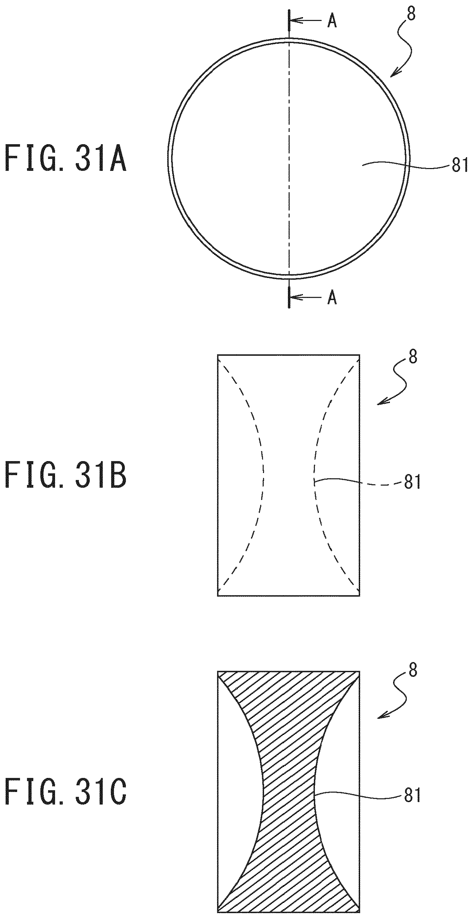

As illustrated in FIG. 30 depicting a cross-sectional view of the rolling bearing 4R along a line C-C in FIG. 29, in the rolling bearing 4R, holding pieces 8 are provided between the balls 42. As illustrated in FIG. 31, the holding piece 8 has spherical concave surfaces 81 corresponding to the balls 42 on its both columnar bottom surfaces.

By providing the holding pieces 8, it becomes possible to prevent competition between the steel balls 42, thus the durability of the balls 42 is improved. Furthermore, in a case of using a snap cage, it is necessary to secure enough thickness to keep a ring shape. That is, by using the holding pieces 8, a difference between an inner diameter of the outer ring and an outer diameter of the inner ring can be reduced as compared with a case of using a snap cage. As a result, the raceway grooves can be made deeper, thus a contact angle can be made as large as possible, and therefore the durability against an axial load is improved.

It is to be noted that the rolling bearing 4R according to the present embodiment has the lids 47 illustrated in FIG. 21, as with the rolling bearing 4J according to the eleventh embodiment. As illustrated in FIG. 21, the straight line Lc indicating a longer direction of an ellipse that forms the head 47b of the lid 47 is tilted to the straight line Lt perpendicular to the axial direction of the outer ring 41R. Furthermore, the center of two bolt insertion holes 47d is located on the straight line Lc.

Then, after the lid 47 is fitted into the rolling element insertion hole 44 of the outer ring 41R as illustrated in FIG. 30, the bolt 49 is screwed into a female screw hole formed on a land portion (a portion between the adjacent outer ring raceway grooves 401) 402 of the outer ring 41R as illustrated in FIG. 29. Accordingly, the lid 47 is secured to the rolling element insertion hole 44 of the outer ring 41R.

The female screw hole is formed on the land portion 402 that is a portion thicker than the portion provided with the outer ring raceway grooves 401 in this way, thus it is possible to secure enough axial dimension (depth) of the female screws with which the lid 47 is attached and to reduce the bearing outer diameter.

[Seventeenth Embodiment]

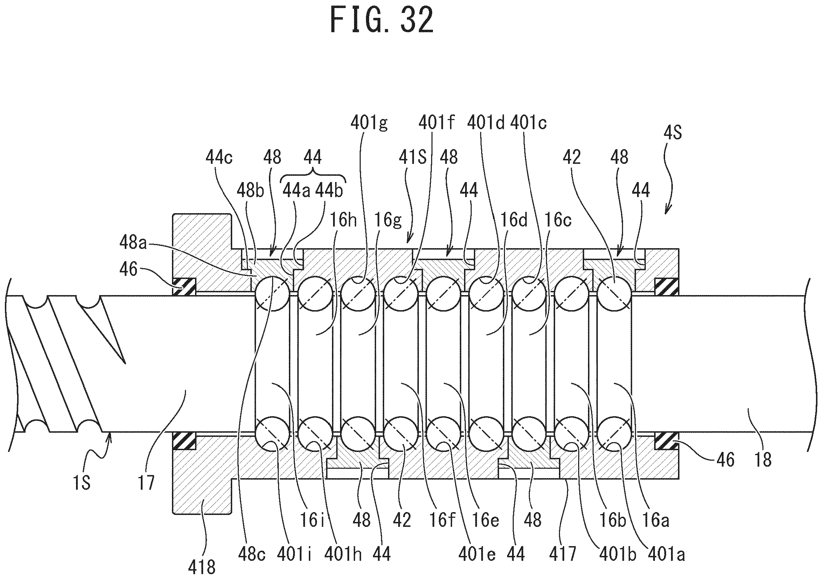

FIG. 32 illustrates a rolling bearing 4S included in a ball screw device 10S according to a seventeenth embodiment. The ball screw device 10S according to the seventeenth embodiment has the same configuration as the ball screw device 10J according to the eleventh embodiment, except for the rolling bearing 4S. The rolling bearing 4S included in the ball screw device 10S according to the seventeenth embodiment has the same configuration as the rolling bearing 4J included in the ball screw device 10J according to the eleventh embodiment, except for the following points.

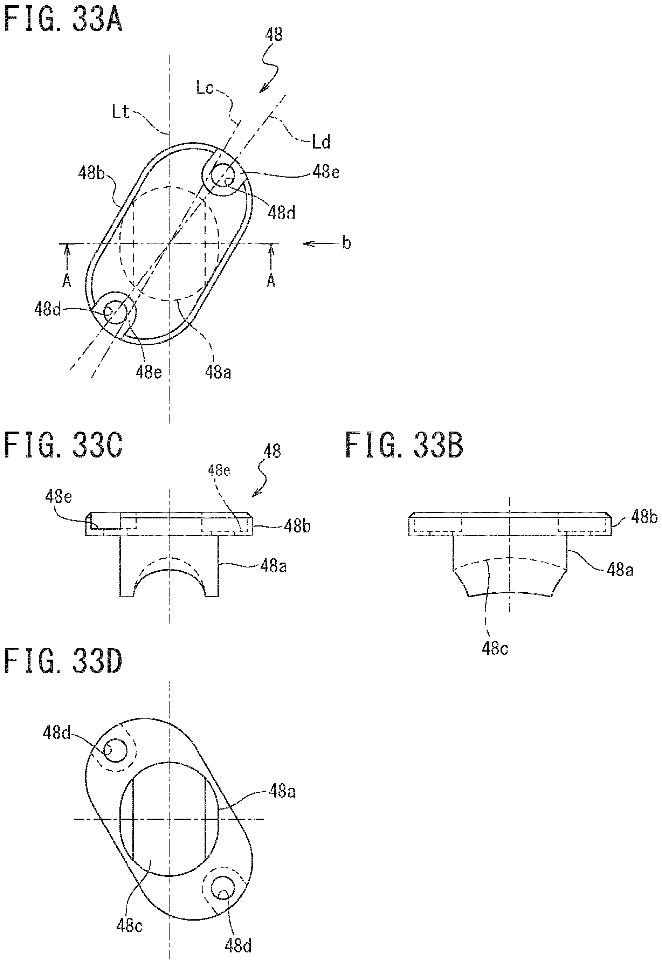

The rolling bearing 4S according to the present embodiment has lids 48 illustrated in FIG. 33, instead of the lids 47 illustrated in FIG. 21. As illustrated in FIG. 33, the lid 48 is composed of a shaft 48a and a head 48b. The planar shape of the shaft 48a is in the shape of an elongate hole, and a distal end surface (an inner surface of a lid portion) 48c of the shaft 48a is formed into a concave shape to serve as part of corresponding one of the outer ring raceway grooves 401a to 401i.

The planar shape of the head 48b is in the shape of an elongate hole, and the head 48b is provided with bolt insertion holes 48d and a counterbore 48e. A straight line Lc indicating a longer direction of an ellipse that forms the head 48b is tilted to a straight line Lt perpendicular to the axial direction of the outer ring 41S. The center of the two bolt insertion holes 48d is located on not the straight line Lc but a straight line Ld at a larger angle of tilt to the straight line Lt than the straight line Lc. A cross-section of the lid 48 along a line A-A in FIG. 33A is seen in FIG. 32.

As illustrated in FIG. 32, each rolling element insertion hole 44 of the outer ring 41S is composed of the inside portion 44a having a shape fitted with the shaft 48a of the lid 48 and the outside portion 44b having a shape fitted with the head 48b. Furthermore, on the boundary surface 44c between the inside portion 44a and the outside portion 44b of the rolling element insertion hole 44, female screws are formed at positions corresponding to the bolt insertion holes 48d.

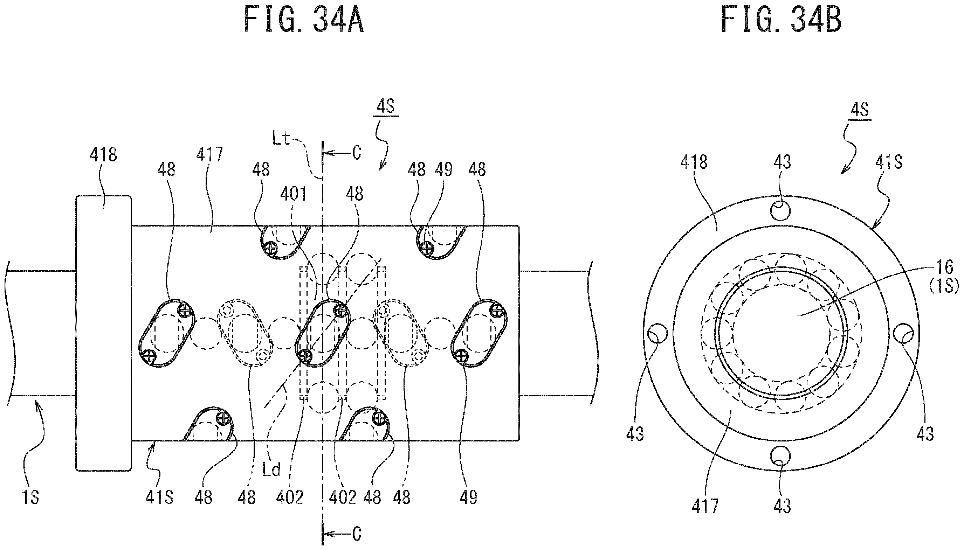

After the lid 48 is fitted into the rolling element insertion hole 44 of the outer ring 41S, the bolt 49 is screwed into the female screw hole formed on the land portion (the portion between the adjacent outer ring raceway grooves 401) 402 of the outer ring 41S as illustrated in FIG. 34. Accordingly, the lid 47 is secured to the rolling element insertion hole 44 of the outer ring 41S.

The female screw hole is formed on the land portion 402 that is a portion thicker than the portion provided with the outer ring raceway grooves 401 in this way, thus it is possible to secure enough axial dimension (depth) of the female screws with which the lid 48 is attached and to reduce the bearing outer diameter.

Furthermore, the planar shape of the shaft 48a is in the shape of an elongate hole, thus the inside portion 44a of the rolling element insertion hole 44 is also in the shape of an elongate hole. In a case where the inside portion 44a of the rolling element insertion hole is in the shape of a circle, the inserted shaft 48a is likely to rotate and interfere with the ball 42 or the cage, and the operativeness of the rolling bearing 4S may deteriorate. The possibility of this is eliminated if the inside portion 44a of the rolling element insertion hole 44 is in the shape of an elongate hole. Therefore, the operativeness of the rolling bearing 4S is improved by using the lids 48 having the shaft 48a of which the planar shape is an elongate hole.

[Eighteenth Embodiment]

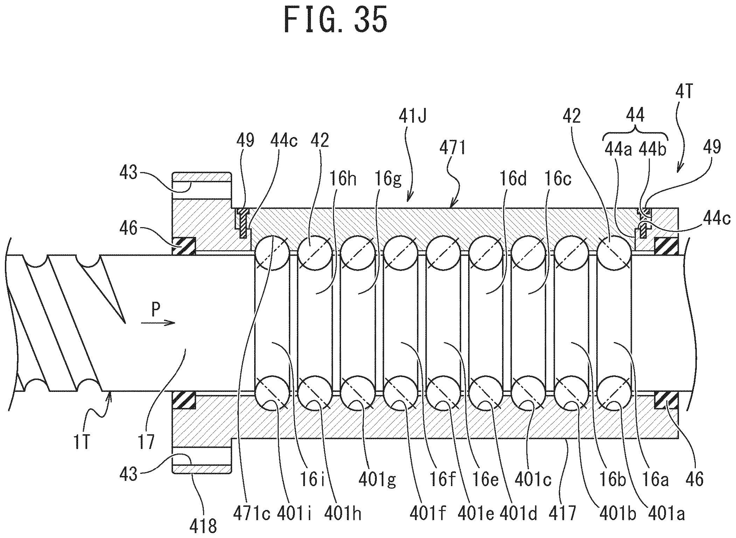

FIG. 35 illustrates a rolling bearing 4T included in a ball screw device according to an eighteenth embodiment. The ball screw device according to the eighteenth embodiment has the same configuration as the ball screw device 10J according to the eleventh embodiment, except for the rolling bearing 4T. The rolling bearing 4T included in the ball screw device according to the eighteenth embodiment has the same configuration as the rolling bearing 4J included in the ball screw device 10J according to the eleventh embodiment, except for the following points.

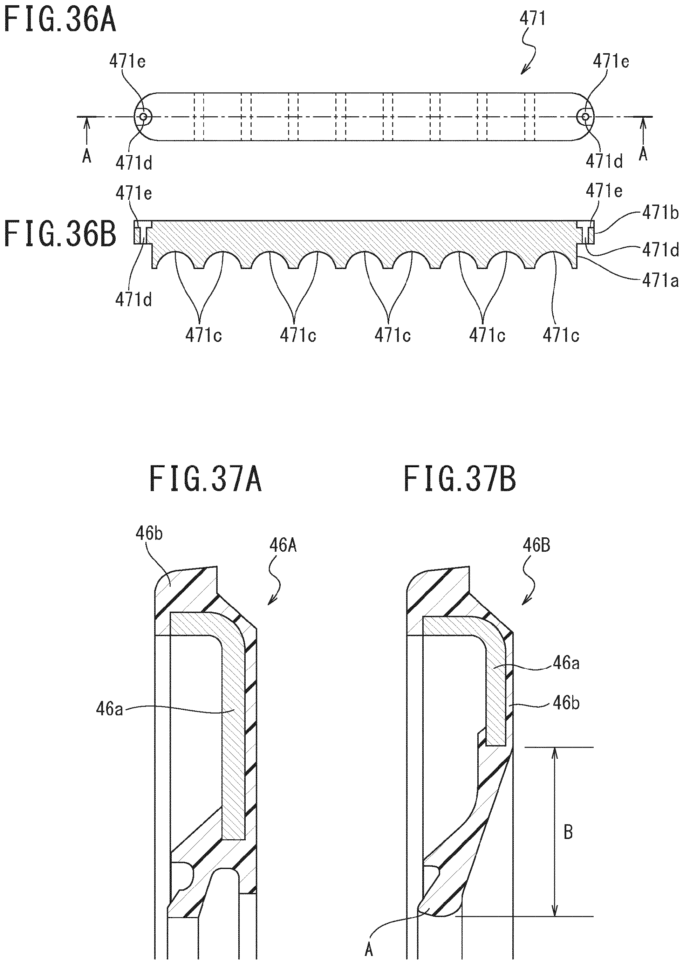

The rolling bearing 4T according to the present embodiment has a lid 471 illustrated in FIG. 36, instead of the lids 47 illustrated in FIG. 21. As illustrated in FIG. 35, an outer ring 41T has one rolling element insertion hole 44 formed over the all outer ring raceway grooves 401a to 401i, and the rolling element insertion hole 44 is covered with one lid 471.

As illustrated in FIG. 36, the lid 471 is composed of a shaft 471a and a head 471b, and a distal end surface (an inner surface of a lid portion) of the shaft 471a is provided with nine rows of concave portions 471c to serve as part of the outer ring raceway grooves 401a to 401i. Both longitudinal ends of the head 471b are each provided with a bolt insertion hole 471d and a counterbore 471e.

As illustrated in FIG. 35, the rolling element insertion hole 44 of the outer ring 41T is composed of the inside portion 44a having a shape fitted with the shaft 471a of the lid 471 and the outside portion 44b having a shape fitted with the head 471b. Furthermore, on the boundary surface 44c between the inside portion 44a and the outside portion 44b of the rolling element insertion hole 44, female screws are formed at positions corresponding to the bolt insertion holes 471d of the lid 471.

After the balls 42 are put into the raceways composed of the inner ring raceway grooves 16a to 16i and the outer ring raceway grooves 401a to 401i from the rolling element insertion hole 44, the lid 471 is fitted into the rolling element insertion hole 44. After that, by putting bolts into the bolt insertion holes 471d on the both ends and screwing the bolts into female screws of the outer ring 41T, the lid 471 is secured not to come out of the rolling element insertion hole 44.

In this way, the ball screw device according to the eighteenth embodiment, the rolling bearing 4T has nine rows of raceways; however, the rolling bearing 4T can be assembled by performing the insertion of the balls 42 into the all raceways from one rolling element insertion hole 44 and then covering the rolling element insertion hole 44 with one lid 471. Therefore, work efficiency of assembling the rolling bearing is increased as compared with the ball screw device according to the eleventh embodiment where the raceways are each provided with a rolling element insertion hole, and each of the rolling element insertion holes is covered with a lid.

That is, in a case of a ball screw device including a multi-row rolling bearing, the work efficiency can be increased by providing each of two or more rows of raceways with a rolling element insertion hole and covering the rolling element insertion hole with a corresponding lid.

[Nineteenth Embodiment]

This embodiment is a modification example of the ball screw device 10J according to the eleventh embodiment, and, as the seals 46 of the rolling bearing 4J included in the ball screw device 10J, a regular contact seal 46A illustrated in FIG. 37A or a low-friction contact seal 46B illustrated in FIG. 37B is used. The contact seals 46A and 46B are composed of a core bar 46a and a highly elastic compact 46b, such as rubber.

By using the contact seal, entry of a foreign substance from the outside can be prevented. Furthermore, by using the low-friction one, an energy saving effect is obtained.

The low-friction contact seal 46B optimizes a shape A of a portion in contact with an inner ring of a seal lip, and a pressing force (a lip reaction force) to the inner ring is optimized by setting a dimension B of a lip portion. By using the low-friction contact seal 46B, the axial length of the threaded shaft can be made shorter. Accordingly, moment of rotatory inertia of the threaded shaft can be suppressed, thus the load on the motor can be reduced.

[Twentieth Embodiment]

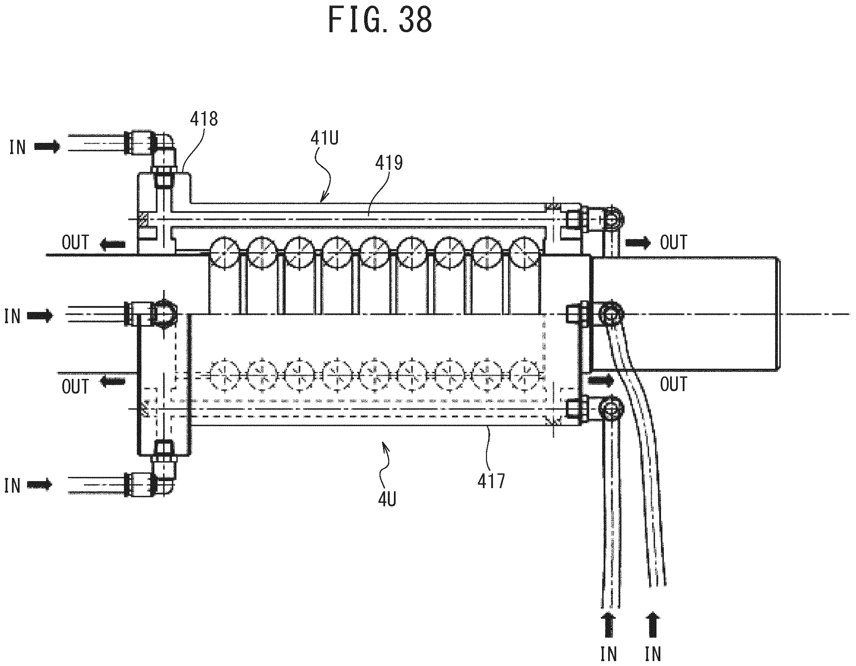

This embodiment is a modification example of the ball screw device 10J according to the eleventh embodiment. In the rolling bearing 4J included in the ball screw device 10J, the seals 46 are used; however, in a rolling bearing 4U included in the ball screw device according to the present embodiment, an air sealing structure illustrated in FIG. 38 is adopted instead of the seals 46.

An air seal is a non-contact seal, and can infinitely reduce seal torque (a resistance force of the seal) as compared with a case of using a contact seal.

In an example of FIG. 38, the outer ring 41U is provided with a through hole 419 extending in the axial direction of the outer ring 41U, and air is flown into the through hole 419 from both the flange portion 418 and an end of the cylindrical portion 417 on the opposite to the flange portion 418. Accordingly, the number of air inlets can be reduced.

[Twenty-first Embodiment]

This embodiment is a modification example of the ball screw device 10J according to the eleventh embodiment, and uses balls made of a material with lower density than bearing steel as the balls 42 of the rolling bearing 4J included in the ball screw device 10J. Specifically, ceramics (silicon nitride, silicon carbide, alumina, etc.) is used as the material of the balls.

A ball screw for high load application such as an injection molding machine is designed to cause an applied high load to be applied in a fixed direction; therefore, the load capacity is increased by increasing the diameter of the balls 42. On the other hand, there is an increasing need for a higher-cycle injection molding machine in recent years, and there is an increasing demand for high-speed rotation of a ball screw.

In the rolling bearing 4J included in the ball screw device 10J, the balls 42 are put into the rolling element insertion holes 44 provided on the outer ring 41J, and the rolling element insertion holes 44 are covered with the lids 47, and then the lids 47 are secured with the bolts 49. Accordingly, a great centrifugal force that is caused by high-speed rotation and acts on the balls 42 is intermittently applied to the bolts 49 of the lids 47, and the bolts 49 may not be able to withstand the centrifugal force. As a measure against this, one of methods is to increase proof stress of the bolts 49 by increasing the number of the bolts 49 or the pitch diameter of the bolts 49. However, in this method, it requires to increase the number of components or increase the outer diameter of the outer ring 41J.

On the other hand, if the balls 42 made of a material such as ceramics having lower density than bearing steel are used, the balls 42 become lighter, thus the centrifugal force is reduced. As a result, it is possible to reduce the load on the bolts 49 used to secure the lids 47. Accordingly, without having to increase the pitch diameter or the number of the bolts 49 used to secure the lids 47, the bolts 49 can withstand the centrifugal force of the balls 42 at the time of high-speed rotation.

[Twenty-second Embodiment]

This embodiment is a modification example of the ball screw device 10J according to the eleventh embodiment, and the rolling bearing 4J included in the ball screw device 10J has a greasing structure.

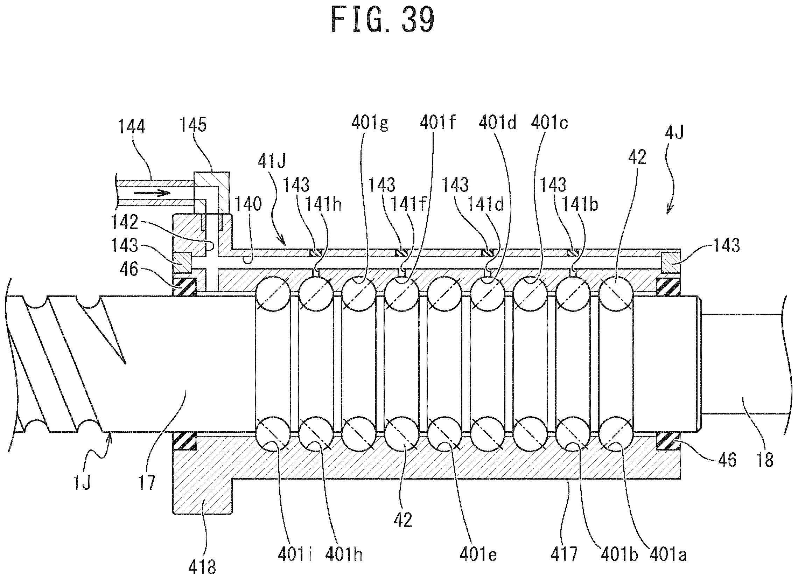

An example of the greasing structure is a structure in which the outer ring 41J is provided with a grease feed line as illustrated in FIG. 39.

This grease feed line includes: a through hole 140 that extends along the axial direction of the outer ring 41J; grease feed holes 141b, 141d, 141f, and 141h that perpendicularly extend from the through hole 140 to the outer ring raceway grooves 401b, 401d, 401f, and 401h; and a through hole 142 that is formed on the flange portion 418 and extends in the radial direction.

Both ends of the through hole 140 are each sealed with a plug 143. An opening of the outer circumferential surface of the cylindrical portion 417 provided to open the grease feed holes 141b, 141d, 141f, and 141h is also sealed with the plug 143. A joint 145 of a grease (or lubricating oil) pipe 144 is connected to an outer-circumference-side end of the through hole 142 of the flange portion 418.

In an example of FIG. 39, respective amounts of grease (or lubricating oil) flowing into the grease feed holes are equalized in such a manner that the farther away the grease feed hole is located from the flange portion 418 located on the upstream side of the grease feed line, the larger the cross-sectional area of the grease feed hole is increased. That is, a relationship between the cross-sectional area and the grease feed hole satisfies the following inequality: the grease feed hole 141h < the grease feed hole 141f < the grease feed hole 141d < the grease feed hole 141b.

Furthermore, the grease feed holes 141b, 141d, 141f, and 141h are each formed on the center of the corresponding outer ring raceway groove in the width direction in a size enough for the ball 42 not to come into contact with the grease feed hole. Accordingly, an excellent greasing effect is obtained.

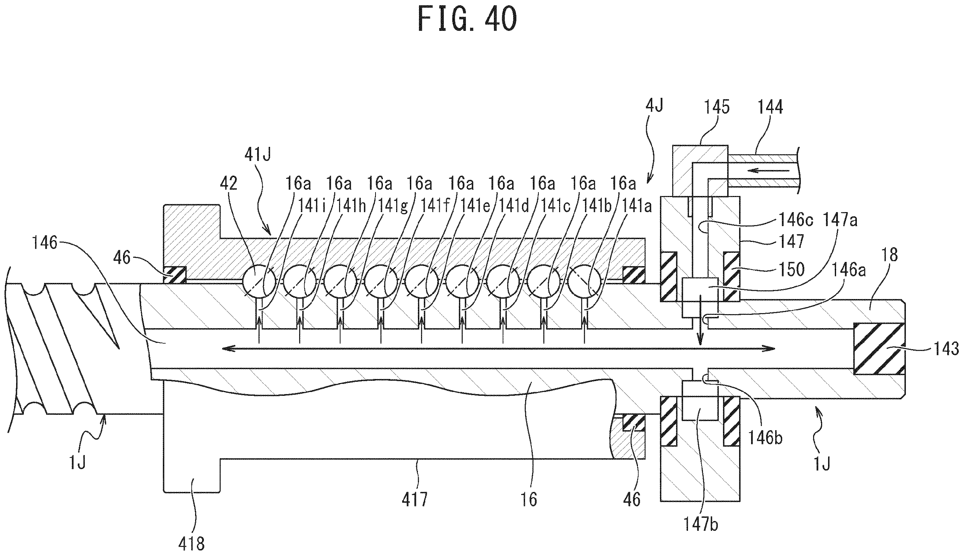

Another example of the greasing structure is a structure in which the threaded shaft 1J is provided with a grease feed line as illustrated in FIG. 40.

This grease feed line includes: a center hole 146 that extends along the axial direction of the threaded shaft 1; and grease feed holes 141a to 141i that perpendicularly extend from the center hole 146 to the inner ring raceway grooves 16a to 16i. The center hole 146 is formed over a range of the motor connection end 18, the raceway groove formation portion 16, and the screw shank 17. Both ends of the center hole 146 are each sealed with the plug 143.

A circular member 147 is fitted onto the boundary between the motor connection end 18 and the raceway groove formation portion 16. On a portion of the motor connection end 18 onto which the circular member 147 is fitted, holes 146a and 146b perpendicularly extending from the center hole 146 are formed. A concave portion of the circular member 147 has inner circumferential grooves 147a and 147b connecting to the holes 146a and 146b. The circular member 147 has a hole 146c extending from the inner circumferential groove 147a to an outer circumferential end along the radial direction. The joint 145 of the grease (or lubricating oil) pipe 144 is connected to an outer-circumference-side end of the hole 146c.

Airtight seals 150 are provided between the circular member 147, the raceway groove formation portion 16, and the motor connection end 18. The inner circumferential groove 147b serves as a lubricant reservoir. Arrows indicate the flow of grease (or lubricating oil).

In an example of FIG. 40, the grease feed holes 141a to 141i extending to all of the inner ring raceway grooves 16a to 16i are provided, thus an excellent greasing effect is obtained. Furthermore, grease (or lubricating oil) can be effectively supplied by rotation of the threaded shaft (the centrifugal force). The amount of grease (or lubricating oil) flowing into the grease feed holes can be equalized in such a manner that the farther away the grease feed hole is located from the circular member 147 located on the upstream side of the grease feed line, the larger the cross-sectional area of the grease feed hole is increased.

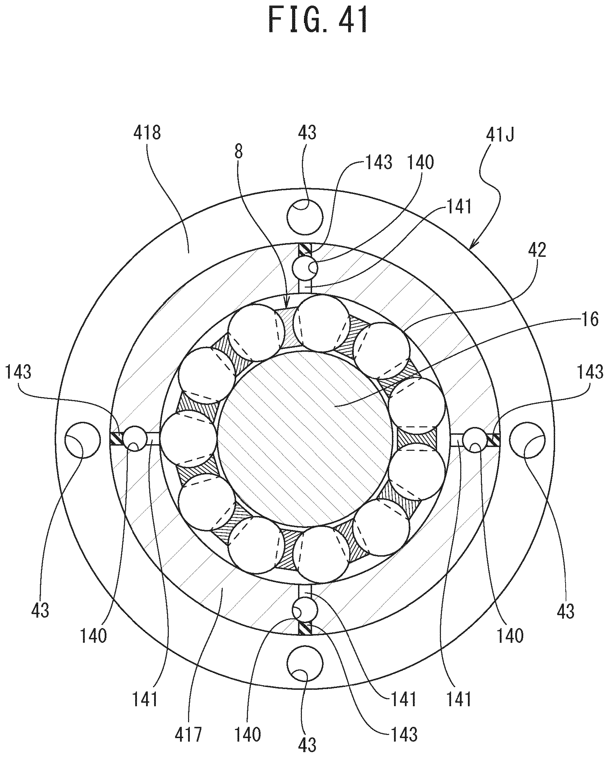

In an example illustrated in FIG. 41, the outer ring 41J is provided with a grease feed line, as with the example of FIG. 39; however, it differs from the example of FIG. 39 in the way that one outer ring raceway groove 401 has multiple grease feed lines in the circumferential direction. In the example illustrated in FIG. 41, four grease feed lines each having the through hole 140 and the grease feed hole 141 are provided at 90-degree intervals. By providing one raceway with multiple grease feed holes in this way, the greasing effect can be enhanced. Furthermore, by equally spacing the multiple grease feed holes from one another, the further enhanced greasing effect is obtained.

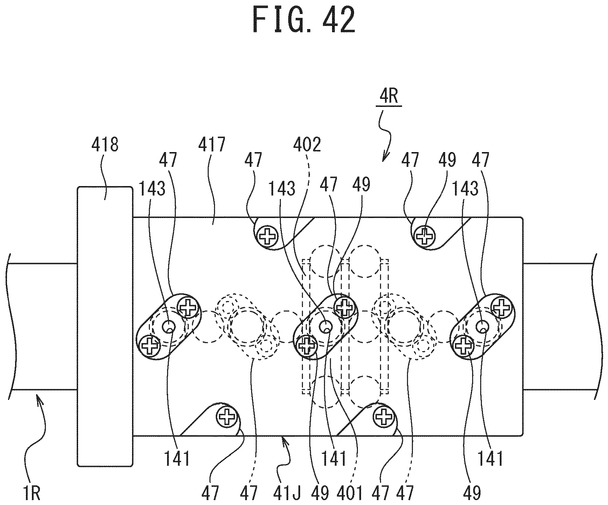

In an example illustrated in FIG. 42, the lids 47 are each provided with the grease feed hole 141. The grease feed hole 141 is formed to extend along the radial direction of the outer ring 41J when attached with the lid 47. The grease feed hole 141 is sealed with the plug 143. In the example illustrated in FIG. 42, one lid 47 is provided with one grease feed hole 141; however, one lid 47 can be provided with multiple grease feed holes to enhance the greasing effect.

Furthermore, a solid lubricating film may be attached to the inner circumferential surface of the lid 47. Moreover, the lid 47 may be formed of a material including a solid lubricant.

Furthermore, a solid lubricating film may be attached to a portion of a ball holding member, such as a cage or the holding piece 8, in contact with the ball 42. Moreover, the ball holding member, such as a cage or the holding piece 8, may be formed of a material including a solid lubricant.

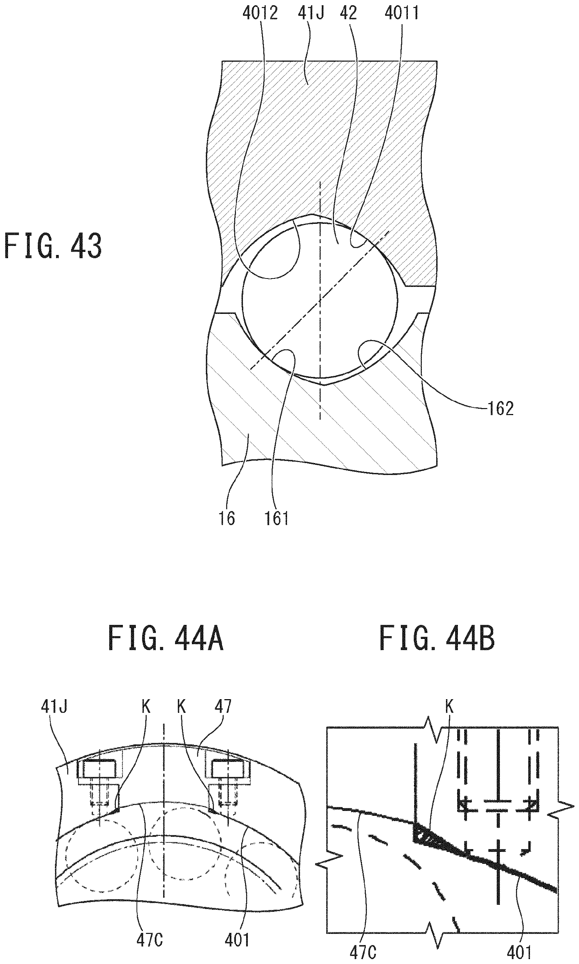

Furthermore, a solid lubricating film may be attached to a surface 4011 of the outer ring 41J in contact with the ball 42 of the outer ring raceway groove and a surface 161 of the raceway groove formation portion 16 in contact with the ball 42 of the inner ring raceway groove as illustrated in FIG. 43. The lubricating effect can be further enhanced by increasing the thickness of the solid lubricating film of surfaces 4012 and 162 on the side usually not in contact with the ball 42, or by devising the shapes of the surfaces 4012 and 162 to contact with the ball 42.

Moreover, as illustrated in FIG. 44, a portion in contact with the ball 42 when moving from the outer ring raceway groove 401 to the distal end surface 47c of the lid 47 (a corner formed by the rolling element insertion hole 44 and the outer ring raceway groove 401) may be provided with crowning (a slope) K to accumulate grease in this portion.

[Twenty-third Embodiment]

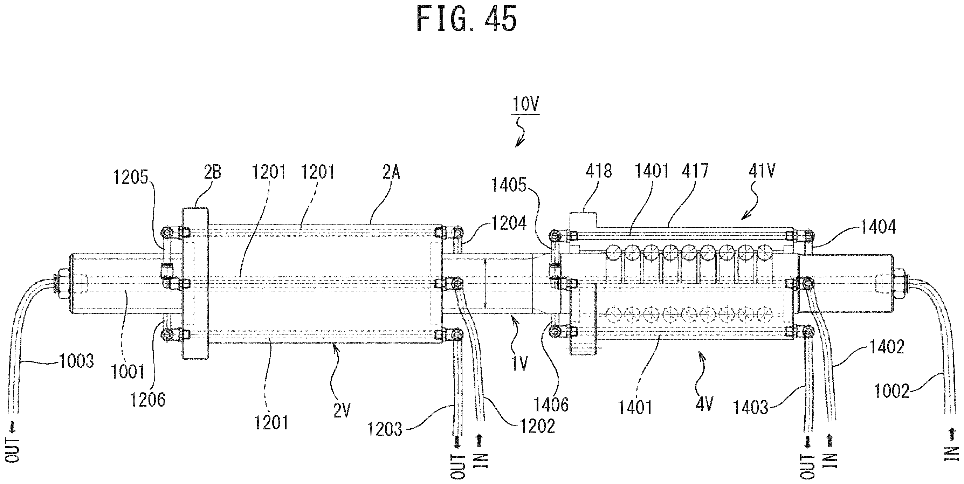

As illustrated in FIG. 45, a ball screw device 10V according to the present embodiment has a cooling mechanism. Except for this, the ball screw device 10V has the same configuration as the ball screw device 10J according to the eleventh embodiment.

In an example of FIG. 45, the shaft center of a threaded shaft 1V is provided with a through hole 1001 extending in the axial direction. A coolant supply pipe 1002 is connected to one end of the through hole 1001, and a coolant discharge pipe 1003 is connected to the other end. Accordingly, a coolant supplied into the coolant supply pipe 1002 passes through the through hole 1001 provided on the entire threaded shaft 1V in the axial direction, and then is discharged from the coolant discharge pipe 1003 to the outside. The threaded shaft 1V is cooled by the coolant.

Through holes 1201 extending in the axial direction are formed at four (multiple) circumferential points on a nut 2V. On an axial end of the cylindrical portion 2A on the side opposite to the flange portion 2B, a coolant supply pipe 1202 is connected to one of the through holes 1201, and a coolant discharge pipe 1203 is connected to the adjacent through hole 1201. The other two through holes 1201 are connected through a pipe 1204.

On an end on the side of the flange portion 2B, the other end of the through hole 1201 whose one end is connected to the coolant supply pipe 1202 is connected to the adjacent through hole 1201 through a pipe 1205, and the other end of the through hole 1201 whose one end is connected to the coolant discharge pipe 1203 is connected to the adjacent through hole 1201 through a pipe 1206. Accordingly, a coolant supplied into the coolant supply pipe 1202 passes through all the through holes 1201 of the nut 2V, and then is discharged from the coolant discharge pipe 1203 to the outside. The nut 2V is cooled by the coolant.

Through holes 1401 extending in the axial direction are formed at four (multiple) circumferential points on an outer ring 41V of a rolling bearing 4V. On an axial end of the cylindrical portion 417 on the side opposite to the flange portion 418, a coolant supply pipe 1402 is connected to one of the through holes 1401, and a coolant discharge pipe 1403 is connected to the adjacent through hole 1401. The other two through holes 1401 are connected through a pipe 1404.

On an end on the side of the flange portion 418, the other end of the through hole 1401 whose one end is connected to the coolant supply pipe 1402 is connected to the adjacent through hole 1401 through a pipe 1405, and the other end of the through hole 1401 whose one end is connected to the coolant discharge pipe 1403 is connected to the adjacent through hole 1401 through a pipe 1406. Accordingly, a coolant supplied into the coolant supply pipe 1402 passes through all the through holes 1401 of the outer ring 41V, and then is discharged from the coolant discharge pipe 1403 to the outside. The outer ring 41V is cooled by the coolant.

In the ball screw device 10V, in any of the threaded shaft 1V, the nut 2V, and the outer ring 41V, the coolant is flown along the axial direction. Furthermore, in the nut 2V and the outer ring 41V, the coolant is flown into the multiple through holes arranged in tandem. The further enhanced cooling effect is obtained by flowing the coolant and causing turbulence (a Reynolds number of 2000 or more).

Not only the nut 2V and the outer ring 41V, but also the threaded shaft 1V including the raceway groove formation portion 16 provided with the inner ring raceway groove are cooled; therefore, the ball screw device 10V becomes functionally stabled as a system and has a longer life.

The ball screw device 10V according to the twenty-third embodiment has the cooling mechanism, thus can suppress generation of heat from the ball screw and the rolling bearing, and therefore can achieve the suppression of early failure and the stabilization of functions.

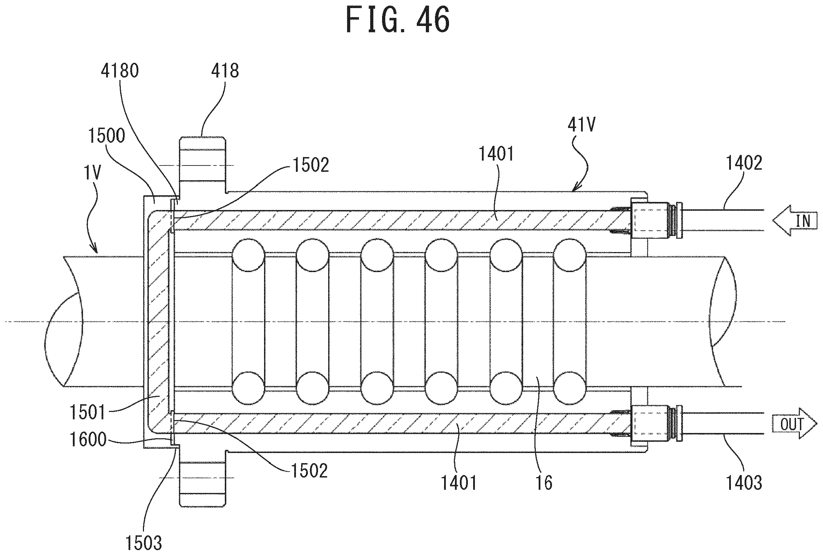

In the example of FIG. 45, the multiple through holes 1401 are connected through the pipes 1205 and 1206 on the end on the side of the flange portion 418; however, this connection may be established by using a circular connecting member 1500 illustrated in FIG. 46.

In an example of FIG. 46, the connecting member 1500 has a cooling water passage 1501 along the circumferential direction and a connection port 1402 overlapping with the multiple through holes 1401. A small diameter portion 4180 is formed on an axial end of the outer ring 41V on the side of the flange portion 418, and the connecting member 1500 has a coupling portion 1503 fitted onto the small diameter portion 4180. A seal 1600 is installed between the small diameter portion 4180 and the connecting member 1500.

In the example of FIG. 46, the connecting member 1500 is used instead of the pipes 1205 and 1206, thus the size is reduced as compared with the example of FIG. 45, and the number of joints is reduced, which reduces the risk of liquid leakage. Furthermore, it is often the case that connection using the connecting member 1500 illustrated in FIG. 46 is actually adopted in a ball screw cooling mechanism.

Reference Signs List

10, 10A to 10H, 10J to 10M, 10Q ball screw device
1 threaded shaft
11 helical groove of threaded shaft
12 one axial end of the threaded shaft
12a, 12b inner ring raceway groove
15 helical groove formation portion (portion provided with helical groove)
16, 16K to 16N raceway groove formation portion (portion provided with inner ring raceway groove)
16a inner ring raceway groove
16b inner ring raceway groove
16c inner ring raceway groove
16d inner ring raceway groove
16e inner ring raceway groove
16f inner ring raceway groove
16g inner ring raceway groove
16h inner ring raceway groove
16i inner ring raceway groove
16n inner ring raceway groove
17 screw shank
18 motor connection end
2 nut
21 helical groove of nut
3 ball (first ball)
4, 4A to 4H, 4J to 4M, 4Q rolling bearing
41, 41A to 41H, 41J to 41N, 41Q outer ring
401a outer ring raceway groove
401b outer ring raceway groove
401c outer ring raceway groove
401d outer ring raceway groove

401e outer ring raceway groove
401f outer ring raceway groove
401g outer ring raceway groove
401h outer ring raceway groove
401i outer ring raceway groove
401n outer ring raceway groove
411, 412 divided part
411b, 412b axial end surface
411c notch (groove)
412c notch (groove)
413 spacer
414 large diameter portion (large diameter portion of outer ring)
414b axial end surface of the large diameter portion
415 small diameter portion (small diameter portion of outer ring)
415a outer circumferential surface of small diameter portion
416 undercut
417 cylindrical portion of outer ring
418 flange portion of outer ring
42, 42a ball (second ball)
44 rolling element insertion hole
45 lid
45c distal end surface (inner surface of lid portion)
47 lid
47c distal end surface (inner surface of lid portion)
6 detent

**Claims**

1. A ball screw device (10Q) comprising:

   a threaded shaft (1Q);
   a nut (2) into which the threaded shaft is inserted having a helical groove (21) that faces a helical groove of the threaded shaft;
   multiple first balls configured to be rollably arranged on a helical raceway configured by the helical groove of the threaded shaft and the helical groove of the nut;
   an inner ring raceway groove (16a to 16i) formed on an outer circumferential surface of a portion of the threaded shaft (1Q) that is a different portion having the helical groove in an axial direction;
   an outer ring (41Q) having an outer ring raceway groove (401a to 401i) that faces the inner ring raceway groove (16a to 16i); and
   multiple second balls (42) configured to be rollably arranged between the inner ring raceway groove (16a to 16i) and the outer ring raceway groove (401a to 401i),
   wherein the inner ring raceway groove (16a to 16i), the outer ring (41Q), and the second balls (42) configure a rolling bearing, and wherein the ball screw device converts rotation of the threaded shaft (1Q) into linear motion of the nut (2) through the first balls rolling on the helical raceway while being subjected to a load, **characterized in that** the outer ring (41Q) has a rolling element insertion hole (44) penetrating from its outer circumferential surface to the outer ring raceway groove (401a to 401i) and a lid (47) configured to cover the rolling element insertion hole (44), and an inner surface of the lid (47) is formed into a concave shape to serve as part of the outer ring raceway groove (401a to 401i), and **in that** the outer ring (41Q) is composed of a cylindrical portion (417) and a flange portion (418) protruding radially outward from the outer peripheral surface of the cylindrical portion (417) in which bolt insertion holes (43) penetrate in the axial direction.

2. The ball screw device (10Q) according to claim 1, wherein an outer diameter of an outer circumferential surface of the threaded shaft (1Q) is same as a portion having the helical groove (21) and a portion having the inner ring raceway groove (16a to 16i).

3. The ball screw device (10Q) according to claim 2, wherein a retained austenite amount $\gamma_{RS}$ [volume%] of a surface of the threaded shaft (1Q) satisfies following Equation (1) in the portion having the helical groove (11) and the portion having the inner ring raceway groove (16a to 16i),

$$\gamma_{RS} = \frac{\alpha_S + 1.14}{0.238} \quad \cdots (1)$$

where $\alpha_S$ denotes a life ratio of the helical groove (11) of the threaded shaft (1Q) to a required life of the ball screw device (10Q), and $\alpha_S$ is greater than 1.

4. The ball screw device (10Q) according to claim 2, wherein a retained austenite amount $\gamma_{RS}$ [volume%] of a surface of the threaded shaft (1Q) satisfies the following Equation (1) in a range from the portion having the inner ring raceway groove (16a to 16i) to the portion having the helical groove (11) in the axial direction,

$$\gamma_{RS} = \frac{\alpha_S + 1.14}{0.238} \quad \cdots (1)$$

where $\alpha_S$ denotes a ratio of a life of the helical groove (11) of the threaded shaft (1Q) to a required life of the ball screw device (10Q), and $\alpha_S$ is greater than 1.

**Patentansprüche**

1. Kugelrollspindelvorrichtung (10Q), umfassend:

eine Gewindewelle (1Q);
eine Mutter (2), in welche die Gewindewelle eingesetzt ist, mit einer spiralförmigen Nut (21), die einer spiralförmigen Nut der Gewindewelle gegenüberliegt;
mehrere erste Kugeln, die so konfiguriert sind, dass sie rollbar auf einer spiralförmigen Laufbahn angeordnet sind, die durch die spiralförmige Nut der Gewindewelle und die spiralförmige Nut der Mutter konfiguriert ist;
eine Innenring-Laufbahnnut (16a bis 16i), die an einer Außenumfangsfläche eines Abschnitts der Gewindewelle (1Q) ausgebildet ist, der ein anderer Abschnitt mit der spiralförmigen Nut in einer axialen Richtung ist;
einen Außenring (41Q) mit einer Außenring-Laufbahnnut (401a bis 401i), die der Innenring-Laufbahnnut (16a bis 16i) gegenüberliegt; und
mehrere zweite Kugeln (42), die so konfiguriert sind, dass sie zwischen der Innenring-Laufbahnnut (16a bis 16i) und der Außenring-Laufbahnnut (401a bis 401i) rollbar angeordnet sind, wobei die Innenring-Laufbahnnut (16a bis 16i), der Außenring (41Q) und die zweiten Kugeln (42) ein Wälzlager bilden, und wobei die Kugelrollvorrichtung die Drehung der Gewindewelle (1Q) in eine lineare Bewegung der Mutter (2) umwandelt, indem die ersten Kugeln unter Last auf der spiralförmigen Laufbahn abrollen,
**dadurch gekennzeichnet, dass**
der Außenring (41Q) ein Rollelement-Einsetzloch (44) hat, das von seiner Außenumfangsfläche zu der Außenring-Laufbahnnut (401a bis 401i) durchdringt, und einen Deckel (47), der konfiguriert ist, das Rollelement-Einsetzloch (44) abzudecken, und eine Innenfläche des Deckels (47) in einer konkaven Form ausgebildet ist, um als Teil der Außenring-Laufbahnnut (401a bis 401i) zu dienen, und dadurch, dass der Außenring (41Q) durch einen zylindrischen Abschnitt (417) und einen Flanschabschnitt (418) gebildet ist, der von der Außenumfangsfläche des zylindrischen Abschnitts (417) radial nach außen vorsteht, in welchem Bolzeneinsetzlöcher (43) in axialer Richtung eindringen.

2. Kugelrollspindelvorrichtung (10Q) nach Anspruch 1, wobei ein Außendurchmesser einer Außenumfangsfläche der Gewindewelle (1Q) gleich einem Abschnitt mit der spiralförmigen Nut (21) und einem Abschnitt mit der Innenring-Laufbahnnut (16a bis 16i) ist.

3. Kugelrollspindelvorrichtung (10Q) nach Anspruch 2, wobei eine Rest-Austenitmenge $\gamma_{RS}$ [Volumen%] einer Oberfläche der Gewindewelle (1Q) in dem Abschnitt mit der spiralförmigen Nut (11) und dem Abschnitt mit der Innenring-Laufbahnnut (16a bis 16i) die folgenden Gleichung (1)

$$\gamma_{RS} = \frac{\alpha_S + 1.14}{0.238} \quad \cdots (1)$$

erfüllt, wobei $\alpha_S$ ein Lebensdauerverhältnis der spiralförmigen Nut (11) der Gewindewelle (1Q) zu einer erforderlichen Lebensdauer der Kugelrollspindelvorrichtung (10Q) bezeichnet und $\alpha_S$ größer als 1 ist.

4. Kugelrollspindelvorrichtung (10Q) nach Anspruch 2, wobei eine Rest-Austenitmenge $\gamma_{RS}$ [Volumen%] einer Oberfläche der Gewindewelle (1Q) in einem Bereich von dem Abschnitt mit der Innenring-Laufbahnnut (16a bis 16i) zu dem Abschnitt mit der spiralförmigen Nut (11) in der axialen Richtung die folgende Gleichung (1)

$$\gamma_{RS} = \frac{\alpha_S + 1.14}{0.238} \quad \cdots (1)$$

erfüllt, wobei $\alpha_S$ ein Lebensdauerverhältnis der spiralförmigen Nut (11) der Gewindewelle (1Q) zu einer erforderlichen Lebensdauer der Kugelrollspindelvorrichtung (10Q) bezeichnet und $\alpha_S$ größer als 1 ist.

**Revendications**

1. Dispositif de vis à billes (10Q) comprenant :

Une tige filetée (1Q) ;
un écrou (2) dans lequel la tige filetée est insérée comprenant une rainure hélicoïdale (21) en vis-à-vis d'une rainure hélicoïdale de la tige filetée ;
de multiples premières billes configurées pour être disposées de manière à rouler sur un chemin de roulement hélicoïdal configuré par la rainure hélicoïdale de la tige filetée et la rainure hélicoïdale de l'écrou ;
une rainure de roulement de la bague intérieure (16a à 16i) formée sur une surface circonférentielle externe d'une portion de la tige filetée (1Q) constituant une portion différente comprenant la rainure hélicoïdale selon une direction axiale ;
une bague extérieure (41Q) comprenant une rainure de roulement de la bague extérieure (401a à 401i) en vis-à-vis de la rainure de roulement de la bague intérieure (16a à 16i) ; et
de multiples secondes billes (42) configurées pour être disposées de manière à rouler entre la rainure de roulement de la bague intérieure (16a à 16i) et la rainure de roulement de la bague extérieure (401a à 401i),

dans lequel la rainure de roulement de la bague intérieure (16a à 16i), la bague extérieure (41Q) et les secondes billes (42) forment un roulement à billes, et dans lequel

le dispositif de vis à billes convertit la rotation de la tige filetée (1Q) en un mouvement linéaire de l'écrou (2) par l'intermédiaire du roulement des premières billes sur le chemin de roulement hélicoïdal qui sont soumises à une charge, **caractérisé en ce que**

la bague extérieure (41Q) a un trou d'insertion d'élément de roulement (44) pénétrant depuis sa surface circonférentielle extérieure jusqu'à la rainure de roulement de la bague extérieure (401a à 401i) et un couvercle (47) configuré pour couvrir le trou d'insertion d'élément de roulement (44), et une surface intérieure du couvercle (47) est formée en une forme concave pour constituer un tronçon de la rainure de roulement de la bague extérieure (401a à 401i), et **en ce que**

la bague extérieure (41Q) est composée d'une portion cylindrique (417) et d'une portion de bride (418) faisant saillie radialement vers l'extérieur depuis la surface périphérique extérieure de la portion cylindrique (417) et dans laquelle des perçage pour insérer des boulons (43) sont traversants selon la direction axiale.

2. Dispositif de vis à billes (IOQ) selon la revendication 1, dans lequel un diamètre extérieur d'une surface circonférentielle extérieure de la tige filetée (IQ) est égal au diamètre extérieur d'une portion comprenant la rainure hélicoïdale (21) et d'une portion comprenant la rainure de roulement de la bague intérieure (16a à 16i).

3. Dispositif de vis à billes (IOQ) selon la revendication 2, dans lequel une quantité d'austénite retenue $\gamma_{RS}$ [volume%] d'une surface de la tige filetée (IQ) satisfait à l'Equation (1) suivante dans la portion comprenant la rainure hélicoïdale (11) et la portion comprenant la rainure de roulement de la bague intérieure (16a à 16i),

$$\gamma_{RS} = \frac{\alpha_S + 1.14}{0.238} \cdots (1)$$

où $\alpha_S$ représente un rapport de durée de vie de la rainure hélicoïdale (11) de la tige filetée (IQ) et une durée de vie requise du dispositif de vis à billes (IOQ), et $\alpha_S$ étant supérieur à 1.

4. Dispositif de vis à billes (IOQ) selon la revendication

2, dans lequel une quantité d'austénite retenue $\gamma_{RS}$ [volume%] d'une surface de la tige filetée (IQ) satisfait à l'Equation (1) suivante dans un intervalle compris entre la portion comprenant la rainure de roulement de la bague intérieure (16a à 16i) et la partie comprenant la rainure hélicoïdale (11) selon la direction axiale,

$$\gamma_{RS} = \frac{\alpha_S + 1.14}{0.238} \cdots (1)$$

où $\alpha_S$ désigne un rapport entre la durée de vie de la rainure hélicoïdale (11) de la tige filetée (IQ) et la durée de vie requise du dispositif à vis à billes (IOQ), et $\alpha_S$ étant supérieur à 1.

FIG. 1

FIG. 2

FIG. 3

**FIG. 4**

**FIG. 5**

FIG. 6A

45
45b
45a

FIG. 6B

45b
45
45a
45c
42

FIG. 6C

45b
45
45c      45a

# FIG. 7

FIG. 8

FIG. 9

FIG. 10

FIG. 11

FIG. 12

FIG. 13

FIG. 14A

FIG. 14B

# FIG. 15

FIG. 16A

FIG. 16B

FIG. 17

FIG. 18

FIG. 19

# FIG. 20A

# FIG. 20B

EP 3 540 264 B1

FIG. 21A

FIG. 21B

FIG. 21C

FIG. 21D

# FIG. 22

EP 3 540 264 B1

FIG. 23

44

# FIG. 24A

# FIG. 24B

EP 3 540 264 B1

FIG. 25

FIG. 26

EP 3 540 264 B1

FIG. 27

48

# FIG. 28

# FIG. 29A

# FIG. 29B

EP 3 540 264 B1

# FIG. 30

FIG. 31A

FIG. 31B

FIG. 31C

# FIG. 32

FIG. 33A

FIG. 33C

FIG. 33B

FIG. 33D

FIG. 34A

FIG. 34B

FIG. 35

FIG.36A

471e    471    471e

471d    471d

FIG.36B

471e    471e    471b
                471d
                471a

471d

471c    471c    471c    471c    471c

FIG.37A    FIG.37B

46b    46A    46B

46a    46a
       46b

46a

B

A

FIG. 38

FIG. 39

FIG. 40

# FIG. 41

# FIG. 42

FIG. 43

4012 41J 42 4011

162

16 161

FIG. 44A

41J K K 47

47C 401

FIG. 44B

K

47C 401

# FIG. 45

EP 3 540 264 B1

# FIG. 46

**REFERENCES CITED IN THE DESCRIPTION**

**Patent documents cited in the description**

- JP 2007285480 A

- JP 2002174229 A